(19) Europäisches Patentamt
European Patent Office
Office européen des brevets

(11) EP 3 842 783 B1

(12) EUROPEAN PATENT SPECIFICATION

(45) Date of publication and mention of the grant of the patent:
**10.01.2024 Bulletin 2024/02**

(21) Application number: **20216966.0**

(22) Date of filing: **23.12.2020**

(51) International Patent Classification (IPC):
***G01N 1/30*** *(2006.01)* ***G01N 21/64*** *(2006.01)*
***G01N 15/14*** *(2006.01)* ***G01N 15/00*** *(2006.01)*
***G01N 21/47*** *(2006.01)*

(52) Cooperative Patent Classification (CPC):
**G01N 1/30; G01N 15/1459; G01N 21/6428;**
G01N 2015/0073; G01N 2021/4707; G01N 2333/44

(54) **BLOOD ANALYZING METHOD**

VERFAHREN ZUR BLUTANALYSE

PROCÉDÉ D'ANALYSE DE SANG

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2019 JP 2019234035**

(43) Date of publication of application:
**30.06.2021 Bulletin 2021/26**

(73) Proprietor: **SYSMEX CORPORATION**
**Kobe-shi**
**Hyogo 651-0073 (JP)**

(72) Inventors:
- **TOYA, Yuji**
  **Kobe-shi, Hyogo 651-0073 (JP)**
- **SENGOKU, Mikako**
  **Kobe-shi, Hyogo 651-0073 (JP)**
- **TSUCHIYA, Seiichiro**
  **Kobe-shi, Hyogo 651-0073 (JP)**

(74) Representative: **De Clercq & Partners**
**Edgard Gevaertdreef 10a**
**9830 Sint-Martens-Latem (BE)**

(56) References cited:
**EP-A1- 1 715 345** **EP-B1- 1 715 345**
**JP-A- H1 175 892** **JP-A- 2004 141 150**
**US-A1- 2004 067 575**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to a dog and horse blood analyzing method.

### BACKGROUND

Piroplasmosis is an infectious disease caused by a piroplasm belonging to family Babesiidae or Theileriidae of order Piroplasmida. A method for detecting the piroplasm is, for example, a technique described in Flow cytometry to evaluate Theileria sergenti parasitemia using the fluorescent nucleic acid stain, SYTO16., Yagi Y, Shiono H, Kurabayashi N, Yoshihara K, Chikayama Y., Cytometry. 2000 Nov 1; 41(3): 223-5. The Flow cytometry to evaluate Theileria sergenti parasitemia using the fluorescent nucleic acid stain, SYTO16., Yagi Y, Shiono H, Kurabayashi N, Yoshihara K, Chikayama Y., Cytometry. 2000 Nov 1; 41(3): 223-5 describes a method for staining a blood sample of a domestic animal with a membrane-permeable fluorescent dye and detecting a piroplasm-infected red blood cell in the obtained sample by a flow cytometer.

An object is to accurately detect a piroplasm-infected red blood cell.

### SUMMARY OF THE INVENTION

The present invention includes following features.

A first aspect of the present invention relates to a dog and horse blood analyzing method comprising: acquiring fluorescence information by irradiating with light a measurement sample prepared by mixing a blood sample collected from an organism, a fluorescent dye that stains nucleic acid, and a cationic surfactant; and detecting a piroplasm-infected red blood cell in the blood sample based on the fluorescence information.

In particular embodiments of this method, the measurement sample may comprise a red blood cell, the fluorescent dye and the cationic surfactant.

In particular embodiments of this method, the cationic surfactant may be a quaternary ammonium salt.

In particular embodiments of this method, the cationic surfactant may be a compound represented by a general formula (I):

[Chem. 1]

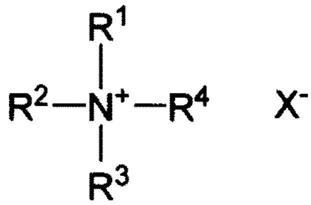

(I)

where $R^1$ is an alkyl group having 8 to 25 carbon atoms, $R^2$, $R^3$, and $R^4$ are identical or different alkyl groups having 1 to 6 carbon atoms, and $X^-$ is an anion.

In particular embodiments, the cationic surfactant may comprise at least one selected from the group consisting of octyltrimethylammonium bromide (OTAB), decyltrimethylammonium bromide (DTAB), lauryltrimethylammonium chloride (LTAC), myristyltrimethylammonium bromide (MTAB), myristyltrimethylammonium chloride (MTAC), cetyltrimethylammonium chloride (CTAC), cetylpyridinium chloride (CPC), and stearyltrimethylammonium chloride (STAC).

In particular embodiments, the fluorescent dye may comprise at least one selected from the group consisting of an imidazole fluorescent dye, a cyanine fluorescent dye, a phenanthridine fluorescent dye, and an acridine fluorescent dye.

In particular embodiments, preferably, the fluorescent dye may comprise at least one selected from the group consisting of an imidazole fluorescent dye and a cyanine fluorescent dye.

In particular embodiments, the measurement sample may comprise a non-ionic surfactant.

In particular embodiments of the method, the non-ionic surfactant may be at least one selected from the group consisting of polyoxyethylene sorbitan monoisostearate, polyoxyethylene sorbitan monooleate, polyoxyethylene hydrogenated castor oil, polyoxyethylene phytosterol, polyoxyethylene phytostanol, polyoxyethylene lauryl ether, polyoxyethylene oleyl ether, polyoxyethylene polyoxypropylene decyltetradecyl ether, polyoxyethylene polyoxypropylene cetyl ether, and polyoxyethylene monolaurate.

In particular embodiments, the detecting may comprise determining a piroplasm-infected red blood cell count in the blood sample.

In particular embodiments, the acquiring may comprise acquiring scattered light information; and the detecting comprises detecting the piroplasm-infected red blood cell in the blood sample based on the fluorescence information and the scattered light information. Preferably the scattered light information is forward-scattered light information.

A second aspect of present invention relates to a use of a piroplasm detection reagent comprising a fluorescent dye that stains nucleic acid, and a cationic surfactant for the first embodiment.

Also disclosed is a blood analyzer comprising: a measurement sample preparation section that prepares a measurement sample by mixing a blood sample collected from a living organism, a fluorescent dye that stains nucleic acid, and a cationic surfactant; a light source that irradiates the measurement sample with light; a detector that acquires fluorescence information obtained from the measurement sample irradiated with the light, and a controller that detects a piroplasm-infected red blood cell in the blood sample based on the fluorescence information.

The present invention enables accurate detection of a piroplasm-infected red blood cell.

BRIEF DESCRIPTION OF THE DRAWINGS

Fig. 1 is a front view illustrating a schematic configuration of a blood analyzer according to one embodiment.
Fig. 2 is a block diagram illustrating a configuration of the blood analyzer according to the one embodiment illustrated in Fig. 1.
Fig. 3 is a perspective view illustrating a measurement unit of the blood analyzer according to the one embodiment illustrated in Fig. 1.
Fig. 4 is a perspective view illustrating an inner structure of the measurement unit of the blood analyzer according to the one embodiment illustrated in Fig. 1.
Fig. 5 is a side view illustrating the inner structure of the measurement unit of the blood analyzer according to the one embodiment illustrated in Fig. 1.
Fig. 6 is a perspective view schematically illustrating a configuration of a flow cell disposed in the measurement unit of the blood analyzer according to the one embodiment illustrated in Fig. 1.
Fig. 7 is a schematic diagram illustrating configurations of an optical measurement section and a chamber that supplies a fluorescent dye (stain) and a hemolytic agent comprising a cationic surfactant to the optical measurement section, the optical measurement section and the camber being disposed in the measurement unit of the blood analyzer according to the one embodiment illustrated in Fig. 1.
Fig. 8 is a schematic diagram illustrating a configuration of the optical measurement section disposed in the measurement unit of the blood analyzer according to the one embodiment illustrated in Fig. 1.
Fig. 9 is a perspective view schematically illustrating a configuration of a DC measurement section disposed in the measurement unit of the blood analyzer according to the one embodiment illustrated in Fig. 1.
Fig. 10 is a perspective view schematically illustrating a configuration of a HGB measurement section disposed in the measurement unit of the blood analyzer according to the one embodiment illustrated in Fig. 1.
Fig. 11 is a flow chart illustrating sample analysis processing in the blood analyzer according to the one embodiment illustrated in Fig. 1.
Fig. 12 shows scattergrams illustrating results of "1. Measurement of piroplasm-infected horse red blood cell" according to an embodiment of the invention.
Fig. 13 shows scattergrams illustrating results of Examples 2 to 4 in "2. Measurement of piroplasm-infected dog blood" according to an embodiment of the invention.
Fig. 14 shows scattergrams illustrating results of Comparative Examples 2 and 3 in "2. Measurement of piroplasm-infected dog blood" according to an embodiment of the invention.
Fig. 15 shows scattergrams illustrating results of Examples 5 and 6 in "2. Measurement of piroplasm-infected dog blood" according to an embodiment of the invention.
Fig. 16 shows scattergrams illustrating results when a horse-derived blood sample is used as a specimen in "3. Measurement by automatic blood cell analyzer" (Examples 7 and 8) according to an embodiment of the invention.
Fig. 17 shows scattergrams illustrating results when dog blood is used as a specimen in "3. Measurement by automatic blood cell analyzer" (Examples 9 and 10) according to an embodiment of the invention.

DETAILED DESCRIPTION OF THE PREFERRED EMBODIMENTS

The dog and horse blood analyzing method according to the present invention includes acquiring fluorescence information by irradiating with light a measurement sample prepared by mixing a blood sample collected from a living

organism, a fluorescent dye that stains nucleic acid (hereinafter, also simply referred to as a "fluorescent dye"), and a cationic surfactant. In particular embodiments, the blood analyzing method is a method for detecting a a piroplasm-infected red blood cell in a sample. In further embodiments, the method is an in vitro method for determining a piroplasm infection in an organism, comprising determining the presence of a piroplasm infected cell in a blood sample of said organism.

(Measurement sample)

The measurement sample is a sample to be flowed through a flow cytometer and measured. The measurement sample comprises red blood cells collected from an organism, a fluorescent dye, and a cationic surfactant.

A concentration of the fluorescent dye in the measurement sample is not particularly limited as long as DNA of a piroplasm in a red blood cell can be stained. The concentration is preferably as follows, from a viewpoint of capability of the fluorescent dye for separating a piroplasm-infected red blood cell (hereinafter, also referred to as an "infected red blood cell") from other components such as a piroplasm uninfected red blood cell (hereinafter, also referred to as an "uninfected red blood cell"), a white blood cell, and a platelet. A lower limit of the concentration is preferably 0.15 μM, more preferably 0.16 μM, further preferably 0.18 μM. An upper limit of the concentration is preferably 1.0 μM, more preferably 0.95 μM, further preferably 0.89 μM.

A lower limit of a concentration of the cationic surfactant in the measurement sample is preferably 0.1 mM, more preferably 0.5 mM, further preferably 2 mM. An upper limit of the concentration of the cationic surfactant in the measurement sample is preferably 100 mM, more preferably 50 mM, further preferably 20 mM.

(Fluorescent dye)

The fluorescent dye is not particularly limited as long as the fluorescent dye is capable of bonding with nucleic acid (selectively DNA in particular) and emitting fluorescence. Any kinds of fluorescent dyes can be used. Examples of the fluorescent dye comprise an imidazole fluorescent dye (Hoechst (trade name) or DAPI), a cyanine fluorescent dye (Cy, TOTO (trade name), or SYTO (trade name)), a phenanthridine fluorescent dye (ethidium bromide or propidium iodide), and an acridine fluorescent dye (acridine orange). Preferable examples comprise an imidazole fluorescent dye or a cyanine fluorescent dye.

Example of the imidazole fluorescent dye comprise Hoechst (trade name). Specific examples comprise a fluorescent dye represented by:

[Chem. 1]

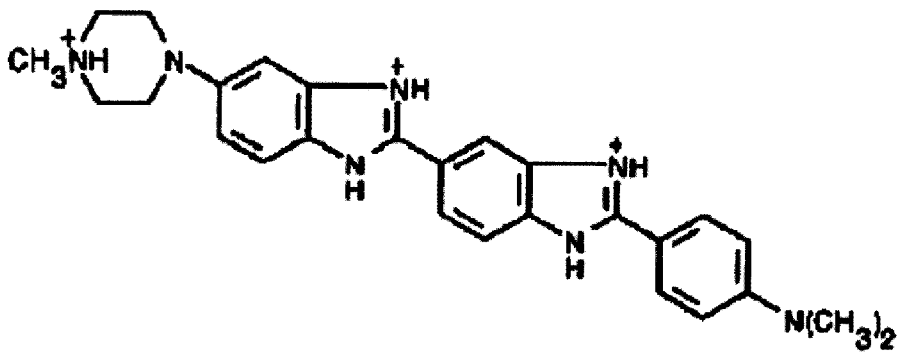

Formula 1

This fluorescent dye is well known to a person skilled in the art as CAS No. 911004-45-0 and is also called Hoechst (trade name) 34580. This fluorescent dye is a DNA-selective fluorescent dye that stains DNA more strongly than RNA. The fluorescent dye can be excited by, for example, blue-violet laser light (wavelength of about 405 nm). The fluorescent dye may be synthesized according to a publicly known method. Alternatively, a commercially available product may be used.

Examples of the cyanine fluorescent dye comprise SYTO (trade name). Specific examples include SYTO (trade

name) 9, SYTO (trade name) 11, SYTO (trade name) 12, SYTO (trade name) 13, SYTO (trade name) 14, SYTO (trade name) 16, SYTO (trade name) 21, and SYTO (trade name) 24.

The fluorescent dyes can be used alone or in combination of two or more thereof.

In preparation of the measurement sample, a solution comprising the fluorescent dye (in the present specification, also referred to as a piroplasm analysis stain or a stain) is usually used. A solvent of the stain is not particularly limited as long as the solvent does not hinder blood analysis. The solvent is preferably ethylene glycol, diethylene glycol, polyethylene glycol, water, saline, a lower alcohol (such as ethanol) having 1 to 6 carbon atoms, or a mixture thereof. The solvent is more preferably ethylene glycol.

A lower limit of a concentration of the fluorescent dye in the stain is preferably 3 μM, more preferably 10 μM, further preferably 50 μM. An upper limit of the concentration of the fluorescent dye in the stain is preferably 200 μM, more preferably 180 μM, further preferably 150 μM.

Values of the lower limit and the upper limit of the concentration of the fluorescent dye in the stain are based on limitation in accurately controlling the preparation of the measurement sample that is performed by such a blood analyzer as used in the present embodiment. That is, a volume of the stain that can be pipetted when the measurement sample is prepared using such a blood analyzer as used in the present embodiment is generally about 5 μL to about 50 μL. A volume of a hemolytic agent added to the stain in the blood analyzer is 1.0 mL. An amount of the blood sample is small, so that the concentration of the fluorescent dye is diluted at about 20 times to about 200 times. When the concentration of the fluorescent dye in the measurement sample is in a range (0.15 μM or more and 1.0 μM or less) from the preferable lower limit to the preferable upper limit, the lower limit and the upper limit of the concentration of the fluorescent dye in the stain are 3 μM and 200 μM, respectively.

A method for preparing such a stain is not particularly limited. The stain can be prepared according to a method known by a person skilled in the art. For example, the stain can be prepared by mixing the fluorescent dye and the solvent. When the fluorescent dye and the solvent are mixed in preparation of the stain, the mixture may be stirred. Stirring conditions such as a stirring speed and a stirring time can be appropriately set by a person skilled in the art.

(Cationic surfactant)

The cationic surfactant is not particularly limited as long as the cationic surfactant has an action of damaging a cell membrane of a red blood cell. Examples of the cationic surfactant include a quaternary ammonium salt and an alkyl amine salt. Particularly preferable examples include a quaternary ammonium salt.

The quaternary ammonium salt is not particularly limited. Examples include an aliphatic quaternary ammonium salt and an aromatic quaternary ammonium salt. Preferable examples include an aliphatic quaternary ammonium salt. Particularly preferable examples include a compound represented by a general formula (I).

[Chem. 2]

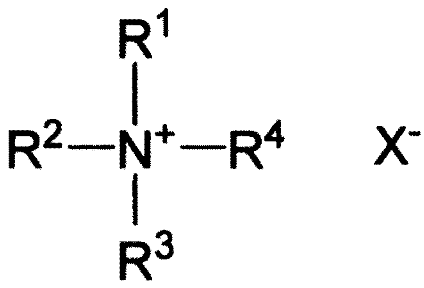

(I)

(In the formula, $R^1$ is an alkyl group having 8 to 25 carbon atoms, $R^2$, $R^3$, and $R^4$ are identical or different alkyl groups having 1 to 6 carbon atoms; and $X^-$ is an anion.)

The alkyl group may be either linear or branched. The alkyl group is preferably linear. Preferable examples of the alkyl group represented by the $R^1$ include an alkyl group having 10 to 20 carbon atoms. More preferable examples comprise an alkyl group having 12 to 18 carbon atoms. Preferable examples of the alkyl groups represented by the $R^2$, $R^3$, and $R^4$ comprise an alkyl group having 1 to 4 carbon atoms. More preferable examples comprise an alkyl group having 1 or 2 carbon atoms. Further preferable examples comprise an alkyl group having one carbon atom. The anion is not particularly limited. Examples comprise a chlorine ion and a bromine ion. Preferable examples comprise a chlorine ion.

Examples of the compound represented by the general formula (I) comprise octyltrimethylammonium bromide

(OTAB), decyltrimethylammonium bromide (DTAB), lauryltrimethylammonium chloride (LTAC), myristyltrimethylammonium bromide (MTAB), myristyltrimethylammonium chloride (MTAC), cetyltrimethylammonium chloride (CTAC), cetylpyridinium chloride (CPC), and stearyltrimethylammonium chloride (STAC).

The cationic surfactants can be used alone or in combination of two or more thereof.

In the preparation of the measurement sample, the cationic surfactant can be directly used. The cationic surfactant, however, is usually used in a form of a solution comprising the cationic surfactant (in the present specification, also referred to as a hemolytic agent). The hemolytic agent may comprise another surfactant than the cationic surfactant. Examples of the other surfactant comprise anionic surfactants such as sodium dodecyl sulfate, ampholytic surfactants such as CHAPS, and non-ionic surfactants such as PBC-44. From the viewpoint of capability of the fluorescent dye for separating the infected red blood cell from the uninfected red blood cell, a non-ionic surfactant such as PBC-44 is preferably used as the other surfactant. In this case, more preferably used as the cationic surfactant is, for example, a compound that has, as the $R^1$, an alkyl group having 14 to 25 carbon atoms (preferably 16 to 22 carbon atoms, more preferably 18 to 20 carbon atoms) in the general formula (I), such as stearyltrimethylammonium chloride (STAC).

A lower limit of a concentration of the cationic surfactant in the hemolytic agent is preferably 0.1 mM, more preferably 0.5 mM, further preferably 2 mM. An upper limit of the concentration of the cationic surfactant in the hemolytic agent is preferably 100 mM, more preferably 50 mM, further preferably 20 mM.

A lower limit of a pH of the hemolytic agent is preferably 5.0, more preferably 5.5. An upper limit of the pH of the hemolytic agent is preferably 7.0, more preferably 6.5.

A lower limit of an osmotic pressure with respect to a red blood cell in the hemolytic agent is preferably 200 mOsm/kg • $H_2O$, more preferably 220 mOsm/kg • $H_2O$. An upper limit of the osmotic pressure with respect to a red blood cell in the hemolytic agent is preferably 300 mOsm/kg • $H_2O$, more preferably 280 mOsm/kg • $H_2O$.

(Blood sample)

The blood sample can be collected from an organism, preferably a living organism, such as a mammal, more particularly a mammal that is susceptible to piroplasm infection. Examples of the mammal comprise non-human mammals such as a dog, a horse, a cow, a cat, a sheep, a goat, a pig, a camel, and a reindeer. In the present specification, the "blood sample" can be any sample comprising red blood cells. Examples comprise whole blood and a sample obtained by treating whole blood. The sample obtained by treating whole blood may be, for example, a sample obtained by separating whole blood into red blood cells and other components through centrifugal separation or the like and removing the other components.

The measurement sample may be diluted with a diluent on a presumption that the concentration of the fluorescent dye and the cationic surfactant in the measurement sample is in the appropriate range. The diluent is not particularly limited as long as the diluent is appropriate for the blood analysis. The diluent is preferably CELLPACK manufactured by SYSMEX CORPORATION. In the methods of the present invention, however, the measurement sample for piroplasm measurement is not preferably diluted with a diluent. As described later, in particular embodiments, the diluent can also be used as a sheath solution for optical measurement or DC measurement.

In particular embodiments, in addition to detection of the infected red blood cell or measurement of a number of infected red blood cells, a rate of red blood cell infection is calculated based on measurement of a number of red blood cells or the number of red blood cells. In this case, a measurement sample for measuring the number of red blood cells is prepared besides the measurement sample for the piroplasm measurement. The measurement sample for measuring the number of red blood cells is preferably diluted with the diluent.

(Method for preparing measurement sample)

A method for preparing the measurement sample is not particularly limited. The measurement sample can be prepared according to a method known by a person skilled in the art. For example, the measurement sample can be prepared by mixing the blood sample, the fluorescent dye (preferably the stain comprising the fluorescent dye), and the cationic surfactant (preferably the hemolytic agent comprising the cationic surfactant).

A lower limit of a temperature for preparing the measurement sample is preferably 20°C, more preferably 39°C. An upper limit of the temperature for preparing the measurement sample is preferably 45°C, more preferably 43°C.

A lower limit of a time for preparing the measurement sample is preferably 10 seconds, more preferably 15 seconds. An upper limit of the time for preparing the measurement sample is preferably 60 seconds, more preferably 25 seconds.

When the blood sample, the fluorescent dye, and the cationic surfactant are mixed in the preparation of the measurement sample, the mixture may be stirred. Stirring conditions such as a stirring speed and a stirring time can be appropriately set by a person skilled in the art. When comprising the diluent, the measurement sample can be prepared similarly to the above-described method for preparing the measurement sample, except that the diluent is further mixed

in addition to the blood sample, the fluorescent dye, and the cationic surfactant.

(Acquisition of fluorescence information)

Irradiation light when the fluorescence information is acquired is not particularly limited in terms of wavelength, as long as the irradiation light is capable of exciting the fluorescent dye. An intensity of the irradiation light can be appropriately set by a person skilled in the art.

The step of acquiring fluorescence information may also comprise acquiring scattered light information obtained by irradiating with light the measurement sample prepared as described above.

The acquisition of the scattered light information and the fluorescence information can be performed using a flow cytometer. In particular embodiments, the acquisition of the scattered light information and the fluorescence information can be performed using a flow cytometer built in a blood analyzer 1 described later.

Based on the fluorescence information, a piroplasm-infected red blood cell in the blood sample is detected. The method for detecting the piroplasm-infected red blood cell is not particularly limited. The detecting method is preferably a method using flow cytometry.

The cationic surfactant comprised in the hemolytic agent damages a cell membrane of a red blood cell and improves membrane permeability of the fluorescent dye. The red blood cell does not contain a nucleus, so that the uninfected red blood cell does not emit fluorescence or emits very weak fluorescence. The infected red blood cell, however, emits stronger fluorescence because the nucleus of a piroplasm is stained. A white blood cell emits much stronger fluorescence than the fluorescence of the infected red blood cell or the uninfected red blood cell. The difference between these emitting of fluorescence is represented by the fluorescence information such as a fluorescence intensity, a fluorescence pulse width, and a fluorescence pulse area. Based on the difference of this fluorescence information, the infected red blood cell can be discerned from the other components. The detecting step may comprise identifying the infected red blood cell and determining an infected red blood cell count. Further, the detecting step may comprise determining a red blood cell count and calculating a rate (described later) of red blood cell infection.

In particular embodiments, the method is a blood analyzing method comprising discerning the infected red blood cell from the other components based on the fluorescence information obtained by the acquiring step.

Using the blood analyzer, as illustrated in Fig. 1, enables the step of acquiring scattered light information and fluorescence information and the step of detecting a piroplasm-infected red blood cell to be automatically performed.

In the particular embodiments of the present invention, detection of the piroplasm-infected red blood cell is performed using a computer program built in the blood analyzer illustrated in Fig. 1. More specifically, the infected red blood cell is identified based on fluorescence information using the computer program. As the fluorescence information, a fluorescence intensity, a fluorescence pulse width, a fluorescence pulse area, or the like can be used. Among these pieces of information, a fluorescence intensity is preferable. The infected red blood cell is considered to generate stronger fluorescence than the fluorescence of the uninfected red blood cell. When a scattergram is used, a region on the scattergram where the infected red blood cell appears can be set at a position with a higher fluorescence intensity than a fluorescence intensity of a region where the uninfected red blood cell appears.

The detecting step preferably comprises detecting the infected red blood cell further using scattered light information. Depending on the species of the animal, the blood sample sometimes comprises many red blood cells having residual DNA, such as a reticulocyte. Usually, the reticulocyte and a mature red blood cell have different scattered light information, so that the scattered light information can further be used for the purpose of more accurately separating the reticulocyte from the infected red blood cell. As the scattered light information, forward-scattered light information and side-scattered light information can be used. The scattered light information is exemplified by a pulse intensity (peak value), a pulse width, and a pulse area of forward-scattered light (for example, light reception angle of around 0 to 20 degrees) or side-scattered light (for example, light reception angle of around 80 to 100 degrees). In particular embodiments, a forward-scattered light intensity is preferably used as the scattered light information.

The infected red blood cell is considered to emit weaker scattered light than scattered light of the red blood cell having residual DNA, such as a reticulocyte. When the scattered light information and the fluorescence information are used, a scattergram may be created that comprises the scattered light information and the fluorescence information as two axes. When a scattergram is used, a region on the scattergram where the infected red blood cell appears can be set at a position with a higher fluorescence intensity than a fluorescence intensity of a region where the uninfected red blood cell appears but with a lower scattered light intensity than a scattered light intensity of a region where the red blood cell having residual DNA, such as a reticulocyte appears. In this case, the number of cells positioned in the infected red-blood-cell appearing region can be calculated as the infected red blood cells. The scattered light intensity used herein is preferably the forward-scattered light intensity.

The blood analyzer used in the particular embodiments of the methods provided herein may not only detect the infected red blood cell but also perform other blood analysis. For example, using such a blood analyzer enables white blood cells to be simply classified into smaller groups (for example, a lymphocyte and an eosinocyte) or enables

measurement of the number of red blood cells and an amount of hemoglobin. Even when the detection of the infected red blood cell is performed simultaneously with the other blood analysis such as the classification of white blood cells, or the measurement of the number of red blood cells or the amount of hemoglobin, the detection is in the scope of the present disclosure.

A further aspect of the invention relates to the use of a piroplasm detection reagent. The piroplasm detection reagent used in the method of the present invention comprises a fluorescent dye and a cationic surfactant. The fluorescent dye, the stain, the cationic surfactant, the hemolytic agent, and the like are as described above. The piroplasm detection reagent is preferably in a form of a reagent kit comprising different containers storing the fluorescent dye and the cationic surfactant, respectively.

Also disclosed is an analyzer for performing the blood analyzing method. That is, provided is a blood analyzer comprising: a measurement sample preparation section that prepares a measurement sample by mixing a blood sample collected from a living organism, a fluorescent dye, and a cationic surfactant; a light source that irradiates the measurement sample with light; a detector that acquires fluorescence information obtained from the measurement sample irradiated with the light, and a controller that detects a piroplasm-infected red blood cell in the blood sample based on the fluorescence information.

The detector may also be configured to further acquire scattered light information obtained by irradiating the measurement sample with the light. The controller may also be configured to detect the piroplasm-infected red blood cell in the blood sample based on the fluorescence information and the scattered light information.

With reference to Figs. 1 to 10, a configuration of a blood analyzer 1 according to one embodiment is described.

The blood analyzer 1 according to this embodiment is an analyzer used for a blood test. The blood analyzer 1 mainly consists of a measurement unit 2 and a data processing unit 3, as illustrated in Fig. 1. The blood analyzer 1 is placed in, for example, a medical facility such as a hospital or a pathology laboratory. In the blood analyzer 1, the measurement unit 2 performs prescribed measurement of a component comprised in the blood sample, and the data processing unit 3 receives data of this measurement and performs analysis processing. The measurement unit 2 and the data processing unit 3 are connected with each other via a data transfer cable 3a to enable mutual data communication. The measurement unit 2 and the data processing unit 3 may be configured to be directly connected with each other via the data transfer cable 3a. Alternatively, the measurement unit 2 and the data processing unit 3 may be connected with each other via, for example, a communication network such as a dedicated circuit using a telephone circuit, a LAN, or the Internet.

In particular embodiments, the measurement unit 2 comprises, as illustrated in Fig. 2, a sample supply section 4, an optical measurement section 5, a DC measurement section 6, a HGB measurement section 7, a controller 8, and a communication section 9. As illustrated in Fig. 3, the measurement unit 2 may comprise, at a front right lower portion thereof, a blood collection tube set section 2a configured to be capable of housing a blood collection tube 20 storing the blood sample. This blood collection tube set section 2a is configured to come out toward a user by the user pushing a button switch 2b disposed near the blood collection tube set section 2a. The user can set the blood collection tube 20 on the blood collection tube set section 2a that has come out. The blood collection tube set section 2a is configured to return into the measurement unit 2 by the use re-pushing the button switch 2b after the blood collection tube 20 is set.

The measurement unit 2 may comprise, as illustrated in Figs. 4 and 5, a pipette 21 that suctions the blood sample, chambers 22 and 23 (see Fig. 5) for mixing the blood sample, a fluorescent dye, and the like to prepare the measurement sample. The pipette 21 is formed in a vertically extending tube. A tip of the pipette 21 is sharply pointed. The pipette 21 is attached to a syringe pump (not illustrated). The pipette 21 is configured to be capable of suctioning and discharging a prescribed amount of a liquid by an operation of this syringe pump. The pipette 21 is connected with a movement mechanism and is configured to be vertically and longitudinally movable. The pipette 21 is configured to suction the blood sample stored in the blood collection tube 20 by making the sharp tip pierce into a rubber cap 20a sealing the blood collection tube 20. The pipette 21 is configured to be moved to a prescribed position by the movement mechanism after suctioning the blood sample and to supply the blood sample into the chamber 22 or 23. In this embodiment the blood analyzer is described in a form comprising the two chambers. The chamber disposed in the blood analyzer and described above may be one or two or more.

The sample supply section 4 is a fluid unit comprising the chambers 22 and 23, a plurality of electromagnetic valves, a diaphragm pump, and the like. The chambers 22 and 23 are disposed for preparing the measurement sample. The fluid unit consisting of the sample supply section 4 is connected with a reagent container. Specifically, the fluid unit is connected with a diluent container 24 for storing a diluent, a hemolytic agent container 25 for storing a hemolytic agent comprising a cationic surfactant, and a stain container 26 for storing a stain used for the piroplasm detection measurement sample. This configuration enables supply of the diluent, the hemolytic agent, and the stain to the chamber 22 or 23. The diluent may be supplied to the chamber 22 or 23 as necessary or need not be supplied.

The optical measurement section 5 is an optical flow cytometer. The optical measurement section 5 is disposed for detection of the infected red blood cell (hereinafter, referred to as piroplasm detection) by flow cytometry using semiconductor laser light. The optical measurement section 5 comprises a flow cell 51 (see Fig. 6) that forms a liquid

current of the measurement sample. The flow cell 51 is formed in a tube by a translucent material such as quartz, glass, or a synthetic resin. The flow cell 51 comprises therein a flow channel through which the measurement sample and the diluent serving as a sheath solution are flowed. This flow cell 51 comprises an orifice 51a whose inner space is made narrower than other parts of the flow cell 51. The orifice 51a has, around an inlet thereof, a double-tube structure. An inner tube portion of the double-tube structure is a sample nozzle 5 1b through which the measurement sample prepared in the chamber 22 or the like is supplied (Fig. 7). A space outside the sample nozzle 51b is a flow channel 51c through which the diluent serving as the sheath solution is flowed. The diluent serving as the sheath solution is flowed through the flow channel 51c and introduced into the orifice 51a. The diluent supplied to the flow cell 51 as described above and serving as the sheath solution is flowed in such a manner as to surround the measurement sample discharged from the sample nozzle 51b. A flow of the measurement sample is made narrower by the orifice 51a. Particles, such as a white blood cell and a red blood cell, comprised in the measurement sample are surrounded by the diluent serving as the sheath solution and pass through the orifice 51a one by one.

In the optical measurement section 5, a semiconductor laser light source 52 is disposed so as to emit laser light toward the orifice 51a of the flow cell 51. This semiconductor laser light source 52 comprises a blue-violet semiconductor laser element 52a. The semiconductor laser light source 52 is configured to be capable of emitting blue-violet laser light having a wavelength of about 405 nm. Between the semiconductor laser light source 52 and the flow cell 51, an irradiation lens system 53 formed of a plurality of lenses is disposed. This irradiation lens system 53 focuses a parallel beam emitted from the semiconductor laser light source 52 on a beam spot. On an optical axis linearly extending from the semiconductor laser light source 52, a beam stopper 54a is disposed so as to face the irradiation lens system 53 with the flow cell 51 interposed between the beam stopper 54a and the irradiation lens system 53. The beam stopper 54a is configured to block out direct light from the semiconductor laser light source 52.

Downstream of the beam stopper 54a along the optical axis is disposed a photodiode 54. The photodiode 54 is configured to receive scattered light of laser light that is generated by the measurement sample flowing through the flow cell 51. Specifically, the direct light from the semiconductor laser light source 52 among beams of light travelling along the optical axis linearly extending from the semiconductor laser light source 52 is blocked out by the beam stopper 54a. Therefore, the photodiode 54 is configured to receive only the scattered light (hereinafter, referred to as forward-scattered light) travelling roughly along an optical-axis direction. The photodiode 54 is configured to photoelectrically convert the forward-scattered light emitted from the flow cell 51 and transmit an electric signal (hereinafter, referred to as a forward-scattered light signal) generated by the photoelectric conversion to an amplifier 54b. The amplifier 54b is configured to amplify the transmitted forward-scattered light signal and output the amplified forward-scattered light signal to the controller 8. The gain (amplification factor) of the light signal, the light-reception sensitivity, and the like can be appropriately set or changed by a person skilled in the art. Changing the gain means changing the amplification factor of the amplifier 54b and/or 58b when light information is acquired.

In a direction lateral to the flow cell 51 and orthogonal to the optical axis linearly extending from the semiconductor laser light source 52 to the photodiode 54, a side condensing lens 55 is disposed. This side condensing lens 55 is configured to condense side light (light emitted in a direction intersecting with the optical axis) generated when a blood cell passing through the flow cell 51 is irradiated with the laser light. Downstream of the side condensing lens 55 is disposed a dichroic mirror 56. The dichroic mirror 56 is configured to divide signal light transmitted from the side condensing lens 55 into a scattered light component and a fluorescence component. In a direction lateral to the dichroic mirror 56 (direction intersecting with an optical-axis direction that joins the side condensing lens 55 with the dichroic mirror 56), a photodiode 57 for receiving side-scattered light is disposed. Downstream of the dichroic mirror 56 along the optical axis are disposed an optical filter 58a and an avalanche photodiode 58. The photodiode 57 is configured to photoelectrically convert the side-scattered light component obtained through the division by the dichroic mirror 56 and transmit an electric signal (hereinafter, referred to as a side-scattered light signal) generated by the photoelectric conversion to an amplifier 57a. The amplifier 57a is configured to amplify the transmitted side-scattered light signal and output the amplified side-scattered light signal to the controller 8. The gain (amplification factor) of the light signal, the light-reception sensitivity, and the like can be appropriately set or changed by a person skilled in the art.

Side-scattered light information obtained via the photodiode 57 and the amplifier 57a is not used in the piroplasm detection of the present embodiment. Therefore, the photodiode 57 and the amplifier 57a are not necessarily essential in the configuration of the blood analyzer. The flow cytometer comprising the photodiode 57 and the amplifier 57a is more general. In cases when the number of red blood cells, the amount of hemoglobin, or the like is measured in addition to the piroplasm detection, the side-scattered light information obtained via the photodiode 57 and the amplifier 57a can be used.

The avalanche photodiode 58 is configured to photoelectrically convert the side fluorescence component obtained after selection of a wavelength by the optical filter 58a and transmit an electric signal (side fluorescence signal) generated by the photoelectric conversion to an amplifier 58b. The amplifier 58b is configured to amplify the transmitted side fluorescence signal and output the amplified side fluorescence signal to the controller 8. The gain (amplification factor) of the light signal, the light-reception sensitivity, and the like can be appropriately set or changed by a person

skilled in the art.

The DC measurement section 6 is configured to be capable of measuring the number of red blood cells (RBC) and a number of platelets (PLT) by a sheath flow DC detecting method. The DC measurement section 6 is configured to be capable of also obtaining measurement data for calculating a hematocrit (HCT) by a red-blood-cell pulse height detecting method. The DC measurement section 6 comprises a flow cell to which the measurement sample is transferred from the chamber 22. For example, as illustrated in Fig. 9, the measurement sample prepared by mixing the blood sample and the diluent in the chamber 22 is transferred from the sample supply section 4 to the flow cell together with the diluent serving as the sheath solution. In the flow cell, a liquid current comprising the measurement sample surrounded by the diluent serving as the sheath solution is formed.

The DC measurement section 6 is not used in the piroplasm detection of the present embodiment. Therefore, the DC measurement section 6 is not necessarily essential in the configuration of the blood analyzer. The blood analyzer comprising the DC measurement section 6, however, is more general. Particularly, in cases when, for example, the number of red blood cells is measured or when a piroplasm infection rate is calculated based on the number of red blood cells, in addition to the piroplasm detection, the blood analyzer preferably comprises the DC measurement section 6. When the number of red blood cells is calculated using the DC measurement section 6, the measurement sample is preferably diluted with the diluent as illustrated in Fig. 9.

The HGB measurement section 7 is configured to measure the amount of hemoglobin (HGB) by a methemoglobin method. The HGB measurement section 7 comprises, as illustrated in Fig. 10, a cell storing a diluted sample. The measurement sample is transferred from the chamber 22 to this cell. The HGB measurement section 7 comprises a light emitting diode that emits light having a wavelength of about 555 nm. The HGB measurement section 7 is configured to irradiate the measurement sample in the cell with the light from the light emitting diode and thus measure absorption of the light.

The HGB measurement section 7 is not used in the piroplasm detection of the present embodiment. Therefore, the HGB measurement section 7 is not necessarily essential in the configuration of the blood analyzer. The blood analyzer comprising the HGB measurement section 7, however, is more general. In cases when, for example, the amount of hemoglobin is measured in addition to the piroplasm detection, the HGB measurement section 7 can be used.

The controller 8 consists of a CPU, a ROM, a RAM, and the like and is configured to control an operation of each of the sections in the measurement unit 2.

The communication section 9 is, for example, an RS-232C interface, a USB interface, or an Ethernet (registered trade name) interface. The communication section 9 is configured to be capable of transmitting and receiving data to and from the data processing unit 3.

The data processing unit 3, as illustrated in Fig. 2, consists of a computer comprising a CPU 31, a ROM 32, a RAM 33, a hard disk 34, a communication interface 35, an input 36 such as a keyboard and a mouse, and a display 37. In the hard disk 34 of the data processing unit 3, an operating system and an application program for analyzing and processing the measurement data received from the measurement unit 2 are installed.

In particular embodiments, the CPU 31 of the data processing unit 3 is configured to execute this application program and thus analyze and process the measurement data and create a scattergram using the forward-scattered light signal and the side fluorescence signal.

The communication interface 35 is, for example, an RS-232C interface, a USB interface, or an Ethernet (registered trade name) interface. The communication interface 35 is configured to be capable of transmitting and receiving data to and from the measurement unit 2.

Next, with reference to Fig. 11, one embodiment of sample analysis processing in the blood analyzer 1 is described.

First, when the blood analyzer 1 is activated, the application program and the like are initialized. Thereafter, in step S1, the CPU 31 of the data processing unit 3 determines whether or not a measurement starting instruction from a user has been received, and this determination is repeated until the instruction is received. When the measurement starting instruction has been received, a measurement starting instruction signal is transmitted from the data processing unit 3 to the measurement unit 2 in step S2.

In step S21, the controller 8 of the measurement unit 2 determines whether or not the measurement starting instruction signal has been received, and this determination is repeated until the signal is received. When the measurement unit 2 receives the measurement starting instruction signal, the pipette 21 suctions the blood sample from the blood collection tube 20 set on the blood collection tube set section 2a in step S22.

In step S23, the sample supply section 4 prepares the measurement sample. Specifically, the blood sample, the stain comprising the fluorescent dye, and the hemolytic agent comprising the cationic surfactant are supplied to the chamber 22 or 23 together with the diluent as necessary, and mixed in the chamber 22 or 23, to prepare the measurement sample. The chamber 22 or 23 may be heated and/or shaken to adjust preparation conditions such as a preparation temperature and a stirring speed of the measurement sample. Thereafter, in step S24, the measurement sample in the chamber 22 or 23 is transferred to the optical measurement section 5 together with the diluent serving as the sheath

solution, and the optical measurement section 5 performs the piroplasm detection. When the detection of a red blood cell is performed in addition to the piroplasm detection, the measurement sample for the detection of the red blood cell is transferred to the DC measurement section 6 together with the diluent serving as the sheath solution, and the DC measurement section 6 performs the detection of the red blood cell. When the detection of hemoglobin (HGB) is performed in addition to the piroplasm detection, the measurement sample for the detection of the hemoglobin is transferred to the HGB measurement section 7, which performs the detection of the hemoglobin. In step S25, the measurement data obtained through the measurement in each of the measurement sections is transmitted from the measurement unit 2 to the data processing unit 3.

In step S3, the data processing unit 3 determines whether or not the measurement data transmitted from the measurement unit 2 has been received, and this determination is repeated until the measurement data is received. When the data processing unit 3 receives the measurement data, the CPU 31 separates, in step S4, the piroplasm-infected red blood cell from a population of other than the infected red blood cell based on the measurement data regarding the piroplasm detection that is obtained through the measurement in step S24. Specifically, the CPU 31 creates a scattergram using the forward-scattered light signal and the side fluorescence signal, and separates, in this scattergram, the piroplasm-infected red blood cell from the population other than the infected red blood cell. More specifically, in the scattergram, a piroplasm uninfected red blood cell appears in a region with a lower fluorescence intensity, but the infected red blood cell appears in a region with a comparatively higher fluorescence intensity. A white blood cell appears in a region with a high intensity in both the fluorescence and the scattered light, attributed to a size and an amount of DNA of the white blood cell. This enable the determination of the presence or absence of piroplasm infection. This also enables the measurement of the number of infected red blood cells that has not been achieved by a conventional technique. When the detection of the red blood cell and/or the detection of the hemoglobin is performed in step S24, the number of red blood cells and/or the amount of hemoglobin can also be calculated based on those items of measurement data. When both the detection of the infected red blood cell and the detection of the red blood cell are performed, a rate of red blood cell infection can also be calculated based on those items of measurement data. The rate of red blood cell infection can be calculated by a following equation.

[Math. 1]

$$\text{(Rate of red blood cell piroplasm infection)} = \text{(number of piroplasm-infected red blood cells)/(number of red blood cells)} \times 100 \text{ (unit: \%)}$$

In step S5, the CPU 31 is capable of outputting information obtained in step S4 on the display. The CPU 31 is capable of recording this information in a recording medium.

Thereafter, in step S6, it is determined whether or not a shutdown instruction from the user has been received, and when the shutdown instruction has not been received, the processing moves to step S1. When the shutdown instruction has been received, the operation of the data processing unit 3 regarding the sample analysis processing in the blood analyzer 1 is terminated. On the measurement unit 2 side, in step S26, it is determined, after the measurement data is transmitted to the data processing unit 3 in step S25, whether or not the shutdown instruction from the user has been received, and when the shutdown instruction has not been received, the processing moves to step S21. When the shutdown instruction has been received, the operation of the measurement unit 2 regarding the sample analysis processing in the blood analyzer 1 is terminated.

Hereinafter, the present disclosure is described in detail based on examples. The present disclosure, however, is not limited by these examples.

1. Measurement of piroplasm-infected horse red blood cell

As the stain in the present test, a liquid (fluorescent dye concentration: 26 μM) was used that was obtained by mixing a fluorescent dye (SYTO (trade name) 16 Green Fluorescent Nucleic Acid Stain-1mM Solution in DMSO(manufactured by Thermo Fisher Scientific)) in ethylene glycol.

In the present test, as the hemolytic agent, a liquid was used that comprised a cationic surfactant (composition: 1.64 g of Cation AB (STAC), 2.50 g of Cation BB-R (LTAC), 1.00 g of PBC 44 (non-ionic), 3.80 g of ADA, 0.20 g of EDTA, 1000 g of purified water, pH (adjusted with NaOH) 6.0, osmotic pressure (adjusted with NaCl) 275) (Example 1). As a comparative example, PBS (specimen diluent) comprising no cationic surfactant was used in place of the hemolytic agent (Comparative Example 1).

A stored horse red blood cell used in the present test was prepared as follows. Whole blood was collected from a healthy horse. Glass beads were put in the obtained whole blood, which was slowly stirred. After the stir, the whole

blood was recovered in a centrifuging tube and centrifuged. Serum and a red blood cell were recovered (buffy coat was discarded). Subsequently, the red blood cell was washed with D-PBS or a basal medium 2 to 3 times (an upper portion of a red-blood-cell layer was discarded). The red blood cell was then suspended in a basal medium (RPMI1640 or M199) and stored until use.

An infected red blood cell suspension obtained by infecting the stored horse red blood cell with a piroplasm using a cultivated strain (T. equi: Theileria equi), and an uninfected red blood cell suspension were prepared. To 17 μL of each of the red blood cell suspensions was added 1 mL of the hemolytic agent or 1 mL of the PBS to give a red blood cell concentration of about $0.3 \times 10^6/\mu L$. Further, 20 μL of the stain was added to the red blood cell suspension to give a fluorescent dye concentration of 500 nM. Thereafter, the mixture was mixed at a room temperature (25 ± 2°C) and incubated for about 30 seconds to give a measurement sample. Using a flow cytometer (BD FACS MELODY), the forward-scattered light signal and the side fluorescence signal of the measurement sample were acquired. A gate was set at an exciting wavelength of 480 nm and a fluorescence wavelength of 525 nm; FL1 for an infected red blood cell population, and the measurement was performed.

Fig. 12 shows results. In the measurement of the infected red blood cell, Example 1 provided excellent separation between an uninfected red blood cell cluster and an infected red blood cell cluster. In contrast, Comparative Example 1 provided no separation of these two populations.

2. Measurement of piroplasm-infected dog blood

As the stain in the present test, a liquid (fluorescent dye concentration: 23 μM) was used that was obtained by dissolving a fluorescent dye (Hoechst 34580 (manufactured by AAT Bioquest)) in ethylene glycol.

As the hemolytic agent in the present test, a liquid having a composition (composition 1 to 7) described in a table below was used (Examples 2 to 6 and Comparative Examples 2 and 3).

[Table 1]

| Composition 1 (used in Example 2) | |
|---|---|
| Cation BB-R (LTAC) | 2.50 g |
| ADA | 3.80 g |
| EDTA | 0.20 g |
| Purified water | 1000 g |
| pH (adjusted with NaOH) | 6.0 |
| Osmotic pressure (adjusted with NaCl) | 275 |

[Table 2]

| Composition 2 (used in Example 3) | |
|---|---|
| Cation AB (STAC) | 1.64 g |
| ADA | 3.80 g |
| EDTA | 0.20 g |
| Purified water | 1000 g |
| pH (adjusted with NaOH) | 6.0 |
| Osmotic pressure (adjusted with NaCl) | 275 |

[Table 3]

| Composition 3 (used in Example 4) | |
|---|---|
| Cation AB (STAC) | 1.64 g |
| Cation BB-R (LTAC) | 2.50 g |
| ADA | 3.80 g |
| EDTA | 0.20 g |
| Purified water | 1000 g |
| pH (adjusted with NaOH) | 6.0 |
| Osmotic pressure (adjusted with NaCl) | 275 |

[Table 4]

| Composition 4 (used in Comparative Example 2) | |
|---|---|
| PBC-44 (non-ionic) | 1.00 g |
| ADA | 3.80 g |
| EDTA | 0.20 g |
| Purified water | 1000 g |
| pH (adjusted with NaOH) | 6.0 |
| Osmotic pressure (adjusted with NaCl) | 275 |

[Table 5]

| Composition 5 (used in Comparative Example 3) | |
|---|---|
| Sodium lauryl sulfate (anionic) | 1.90 g |
| ADA | 3.80 g |
| EDTA | 0.20 g |
| Purified water | 1000 g |
| pH (adjusted with NaOH) | 6.0 |
| Osmotic pressure (adjusted with NaCl) | 275 |

[Table 6]

| Composition 6 (used in Example 5) | |
|---|---|
| Cation AB (STAC) | 1.64 g |
| PBC-44 (non-ionic) | 1.00 g |
| ADA | 3.80 g |
| EDTA | 0.20 g |
| Purified water | 1000 g |
| pH (adjusted with NaOH) | 6.0 |
| Osmotic pressure (adjusted with NaCl) | 275 |

[Table 7]

| Composition 7 (used in Example 6) | |
|---|---|
| Cation AB (STAC) | 1.64 g |
| Cation BB-R (LTAC) | 2.50 g |
| PBC-44 (non-ionic) | 1.00 g |
| ADA | 3.80 g |
| ECTA | 0.20 g |
| Purified water | 1000 g |
| pH (adjusted with NaOH) | 6.0 |
| Osmotic pressure (adjusted with NaCl) | 275 |

Dog blood was prepared that was determined to be positive for piroplasm (Babesia gibsoni) in a PCR test. To 8.5 μL of blood was added 10 μL of the stain and 500 μL of the specimen diluent. The mixture was mixed at a room temperature (25 ± 2°C) and incubated for about 30 seconds to give a measurement sample. Using a flow cytometer (BD FACS Lyric), the forward-scattered light signal and the side fluorescence signal of the measurement sample were acquired. A gate was set at an exciting wavelength of 405 nm and a detection wavelength of 448 ± 45 nm for an infected red blood cell population, and the measurement was performed.

Fig. 13 shows results of Examples 2 to 4. Fig. 14 shows results of Comparative Examples 2 and 3. Fig. 15 shows results of Examples 5 and 6. In the scattergrams, the term Babesia indicates an infected red blood cell cluster,

and the term WBC indicates a white blood cell. Examples 2 to 4 provided excellent separation between the uninfected red blood cell cluster and the infected red blood cell cluster. In contrast, Comparative Examples 2 and 3 provided no separation of these populations. Examples 5 and 6 in which the non-ionic surfactant was further added in addition to the cationic surfactant also provided excellent separation between the uninfected red blood cell cluster and the infected red blood cell cluster.

3. Measurement by automatic blood cell analyzer

As the stain in the present test, Fluorocell M (concentration of nucleic acid staining fluorescent dye: 23 μM) was used. As the hemolytic agent in the present test, the composition 7 was used.

An infected red blood cell suspension obtained by infecting the stored horse red blood cell with a piroplasm using a cultivated strain (B. caballi: Babesia caballi or T. equi: Theileria equi), and an uninfected red blood cell suspension were prepared (Example 7: the B. caballi-infected red blood cell suspension was used, and Example 8: T. equi-infected red blood cell suspension was used). Two dog blood specimens (specimens A and B) determined to be positive for Babesia gibsoni and blood (negative specimen) determined to be negative in a PCR test were prepared. Each of the blood suspensions and the blood specimens was set in an automatic blood cell analyzer (XN-30, manufactured by SYSMEX CORPORATION) and measured (Example 9: the specimen A was used, and Example 10: the specimen B was used).

Fig. 16 shows results of using the horse-derived blood samples as the specimens (Examples 7 and 8). Fig. 17 shows results of using the dog blood as the specimens (Examples 9 and 10). It was clarified that even use of the automatic blood cell analyzer enables excellent separation between the uninfected red blood cell cluster and the infected red blood cell cluster.

## Claims

1. A dog or horse blood analyzing method comprising:

    acquiring fluorescence information by irradiating with light a measurement sample prepared by mixing a blood sample collected from a dog or a horse, a fluorescent dye that stains nucleic acid, and a cationic surfactant; and detecting a piroplasm-infected red blood cell in the blood sample based on the fluorescence information.

2. The blood analyzing method according to claim 1, wherein the measurement sample comprises a red blood cell, the fluorescent dye and the cationic surfactant.

3. The blood analyzing method according to claim 1 or 2, wherein the cationic surfactant is a quaternary ammonium salt.

4. The blood analyzing method according to any one of claims 1 to 3, wherein the cationic surfactant is a compound represented by a general formula (I):

    [Chem. 1]

    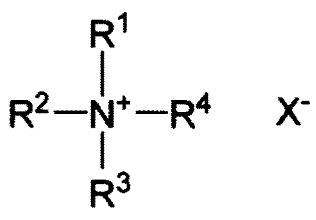

    (I)

    where $R^1$ is an alkyl group having 8 to 25 carbon atoms, $R^2$, $R^3$, and $R^4$ are identical or different alkyl groups having 1 to 6 carbon atoms, and $X^-$ is an anion.

5. The blood analyzing method according to any one of claims 1 to 4, wherein the cationic surfactant comprises at least one selected from the group consisting of octyltrimethylammonium bromide (OTAB), decyltrimethylammonium bromide (DTAB), lauryltrimethylammonium chloride (LTAC), myristyltrimethylammonium bromide (MTAB), myristyltrimethylammonium chloride (MTAC), cetyltrimethylammonium chloride (CTAC), cetylpyridinium chloride (CPC), and stearyltrimethylammonium chloride (STAC).

**6.** The blood analyzing method according to any one of claims 1 to 5, wherein the fluorescent dye comprises at least one selected from the group consisting of an imidazole fluorescent dye, a cyanine fluorescent dye, a phenanthridine fluorescent dye, and an acridine fluorescent dye.

**7.** The blood analyzing method according to any one of claims 1 to 6, wherein the fluorescent dye comprises at least one selected from the group consisting of an imidazole fluorescent dye and a cyanine fluorescent dye.

**8.** The blood analyzing method according to any one of claims 1 to 7, wherein the measurement sample comprises a non-ionic surfactant.

**9.** The blood analyzing method according to claim 8, wherein the non-ionic surfactant is at least one selected from the group consisting of polyoxyethylene sorbitan monoisostearate, polyoxyethylene sorbitan monooleate, polyoxyethylene hydrogenated castor oil, polyoxyethylene phytosterol, polyoxyethylene phytostanol, polyoxyethylene lauryl ether, polyoxyethylene oleyl ether, polyoxyethylene polyoxypropylene decyltetradecyl ether, polyoxyethylene polyoxypropylene cetyl ether, and polyoxyethylene monolaurate.

**10.** The blood analyzing method according to any one of claims 1 to 9, wherein the detecting comprises determining a piroplasm-infected red blood cell count in the blood sample.

**11.** The blood analyzing method according to any one of claims 1 to 10, wherein

the acquiring comprises acquiring scattered light information; and
the detecting comprises detecting the piroplasm-infected red blood cell in the blood sample based on the fluorescence information and the scattered light information.

**12.** The blood analyzing method according to claim 11, wherein the scattered light information is forward-scattered light information.

**13.** A use of a piroplasm detection reagent for the dog or horse blood analyzing method according to any one of claims 1 to 12, the reagent comprising a fluorescent dye that stains nucleic acid, and a cationic surfactant.

**Patentansprüche**

**1.** Hunde- oder Pferdeblutanalyseverfahren umfassend:

Aufnehmen von Fluoreszenzinformation durch Bestrahlen einer Messprobe, hergestellt durch Mischen einer von einem Hund oder Pferd genommenen Blutprobe, eines Fluoreszenzfarbstoffs, der Nukleinsäure färbt, und eines kationischen Tensids, mit Licht; und
Nachweisen einer Piroplasma-infizierten roten Blutzelle in der Blutprobe auf Grundlage der Fluoreszenzinformation.

**2.** Blutanalyseverfahren gemäß Anspruch 1, wobei die Messprobe eine rote Blutzelle, den Fluoreszenzfarbstoff und das kationische Tensid umfasst.

**3.** Blutanalyseverfahren gemäß Anspruch 1 oder 2, wobei das kationische Tensid ein quaternäres Ammoniumsalz ist.

**4.** Blutanalyseverfahren gemäß einem der Ansprüche 1 bis 3, wobei das kationische Tensid eine von einer allgemeinen Formel (I) dargestellte Verbindung ist:

[Chem. 1]

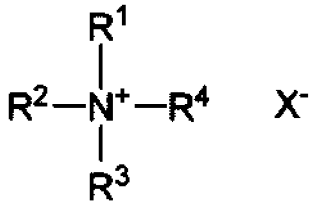

(I)

wobei $R^1$ eine Alkylgruppe mit 8 bis 25 Kohlenstoffatomen ist, $R^2$, $R^3$ und $R^4$ gleiche oder verschiedene Alkylgruppen mit 1 bis 6 Kohlenstoffatomen sind und X- ein Anion ist.

**5.** Blutanalyseverfahren gemäß einem der Ansprüche 1 bis 4, wobei das kationische Tensid wenigstens eines ausgewählt aus der Gruppe bestehend aus Octyltrimethylammoniumbromid (OTAB), Decyltrimethylammoniumbromid (DTAB), Lauryltrimethylammoniumchlorid (LTAC), Myristyltrimethylammoniumbromid (MTAB), Myristyltrimethylammoniumchlorid (MTAC), Cetyltrimethylammoniumchlorid (CTAC), Cetylpyridiniumchlorid (CPC) und Stearyltrimethylammoniumchlorid (STAC) umfasst.

**6.** Blutanalyseverfahren gemäß einem der Ansprüche 1 bis 5, wobei der Fluoreszenzfarbstoff wenigstens einen ausgewählt aus der Gruppe bestehend aus einem Imidazolfluoreszenzfarbstoff, einem Cyaninfluoreszenzfarbstoff, einem Phenanthridinfluoreszenzfarbstoff und einem Acridinfluoreszenzfarbstoff umfasst.

**7.** Blutanalyseverfahren gemäß einem der Ansprüche 1 bis 6, wobei der Fluoreszenzfarbstoff wenigstens einen ausgewählt aus der Gruppe bestehend aus einem Imidazolfluoreszenzfarbstoff und einem Cyaninfluoreszenzfarbstoff umfasst.

**8.** Blutanalyseverfahren gemäß einem der Ansprüche 1 bis 7, wobei die Messprobe ein nichtionisches Tensid umfasst.

**9.** Blutanalyseverfahren gemäß Anspruch 8, wobei das nichtionische Tensid wenigstens eines ausgewählt aus der Gruppe bestehend aus Polyoxyethylensorbitanmonoisostearat, Polyoxyethylensorbitanmonooleat, Polyoxyethylenhydriertes-Rizinusöl, Polyoxyethylenphytosterol, Polyoxyethylenphytostanol, Polyoxyethylenlaurylether, Polyoxyethylenoleylether, Polyoxyethylenpolyoxypropylendecyltetradecylether, Polyoxyethylenpolyoxypropylencetylether und Polyoxyethylenmonolaurat umfasst.

**10.** Blutanalyseverfahren gemäß einem der Ansprüche 1 bis 9, wobei das Nachweisen Bestimmen einer Zahl von Piroplasma-infizierten roten Blutzellen in der Blutprobe umfasst.

**11.** Blutanalyseverfahren gemäß einem der Ansprüche 1 bis 10, wobei

das Aufnehmen Aufnehmen von Streulichtinformation umfasst;
das Nachweisen Nachweisen der Piroplasma-infizierten roten Blutzelle in der Blutprobe auf Grundlage der Fluoreszenzinformation und der Streulichtinformation umfasst.

**12.** Blutanalyseverfahren gemäß Anspruch 11, wobei die Streulichtinformation Vorwärtsstreulichtinformation ist.

**13.** Verwendung eines Piroplasma-Nachweisreagens für das Hunde- oder Pferdeblutanalyseverfahren gemäß einem der Ansprüche 1 bis 12, wobei das Reagens einen Fluoreszenzfarbstoff, der Nukleinsäure färbt, und ein kationisches Tensid umfasst.

**Revendications**

**1.** Procédé d’analyse de sang de chien ou de cheval comprenant :

l’acquisition d’informations de fluorescence par irradiation, avec de la lumière, d’un échantillon de mesure préparé en mélangeant un échantillon de sang collecté d’un chien ou d’un cheval, un colorant fluorescent qui colore un acide nucléique et un tensioactif cationique ; et

la détection d'un globule rouge infecté par un piroplasme dans l'échantillon de sang sur la base des informations de fluorescence.

2. Procédé d'analyse de sang selon la revendication 1, l'échantillon de mesures comprenant un globule rouge, le colorant fluorescent et le tensioactif cationique.

3. Procédé d'analyse de sang selon la revendication 1 ou 2, le tensioactif cationique étant un sel d'ammonium quaternaire.

4. Procédé d'analyse de sang selon l'une quelconque des revendications 1 à 3, le tensioactif cationique étant un composé représenté par une formule générale (I) :

[formule chimique 1]

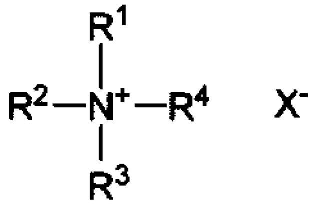

(I)

où $R^1$ est un groupe alkyle ayant 8 à 25 atomes de carbone, $R^2$, $R^3$, et $R^4$ sont des groupes alkyle identiques ou différents ayant 1 à 6 atomes de carbone, et $X^-$ est un anion.

5. Procédé d'analyse de sang selon l'une quelconque des revendications 1 à 4, le tensioactif cationique comprenant au moins l'un choisi dans le groupe constitué par le bromure d'octyltriméthylammonium (OTAB), le bromure de décyltriméthylammonium (DTAB), le chlorure de lauryltriméthylammonium (LTAC), le bromure de myristyltriméthylammonium (MTAB), le chlorure de myristyltriméthylammonium (MTAC), le chlorure de cétyltriméthylammonium (CTAC), le chlorure de cétylpyridinium (CPC) et le chlorure de stéaryltriméthylammonium (STAC).

6. Procédé d'analyse de sang selon l'une quelconque des revendications 1 à 5, le colorant fluorescent comprenant au moins l'un choisi dans le groupe constitué par un colorant fluorescent de type imidazole, un colorant fluorescent de type cyanine, un colorant fluorescent de type phénanthridine et un colorant fluorescent de type acridine.

7. Procédé d'analyse de sang selon l'une quelconque des revendications 1 à 6, le colorant fluorescent comprenant au moins l'un choisi dans le groupe constitué par un colorant fluorescent de type imidazole et un colorant fluorescent de type cyanine.

8. Procédé d'analyse de sang selon l'une quelconque des revendications 1 à 7, l'échantillon de mesures comprenant un tensioactif non ionique.

9. Procédé d'analyse de sang selon la revendication 8, le tensioactif non ionique étant au moins l'un choisi dans le groupe constitué par un monoisostéarate de polyoxyéthylène sorbitane, un monooléate de polyoxyéthylène sorbitane, une huile de ricin hydrogénée polyoxyéthylène, un polyoxyéthylène phytostérol, un polyoxyéthylène phytostanol, un éther de lauryle de polyoxyéthylène, un éther d'oléyle de polyoxyéthylène, un éther de décyltétradécyle de polyoxyéthylène polyoxypropylène, un éther de cétyle de polyoxyéthylène polyoxypropylène et un monolaurate de polyoxyéthylène.

10. Procédé d'analyse de sang selon l'une quelconque des revendications 1 à 9, la détection comprenant la détermination d'un nombre de globules rouges infectés par un piroplasme dans l'échantillon de sang.

11. Procédé d'analyse de sang selon l'une quelconque des revendications 1 à 10,

l'acquisition comprenant une acquisition d'informations de lumière diffusée ; et
la détection comprenant une détection du globule rouge infecté par un piroplasme dans l'échantillon de sang sur la base des informations de fluorescence et des informations de lumière diffusée.

**12.** Procédé d'analyse de sang selon la revendication 11, les informations de lumière diffusée étant des informations de lumière diffusée vers l'avant.

**13.** Utilisation d'un réactif de détection de piroplasme pour le procédé d'analyse de sang de chien ou de cheval selon l'une quelconque des revendications 1 à 12, le réactif comprenant un colorant fluorescent qui colore un acide nucléique, et un tensioactif cationique.

FIG. 1

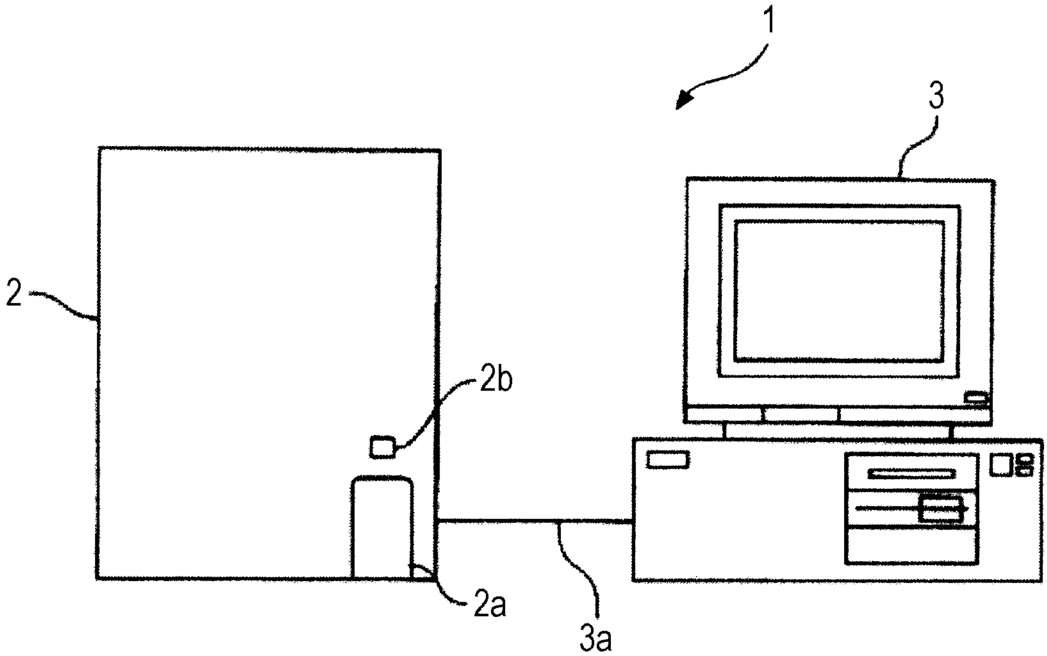

FIG. 2

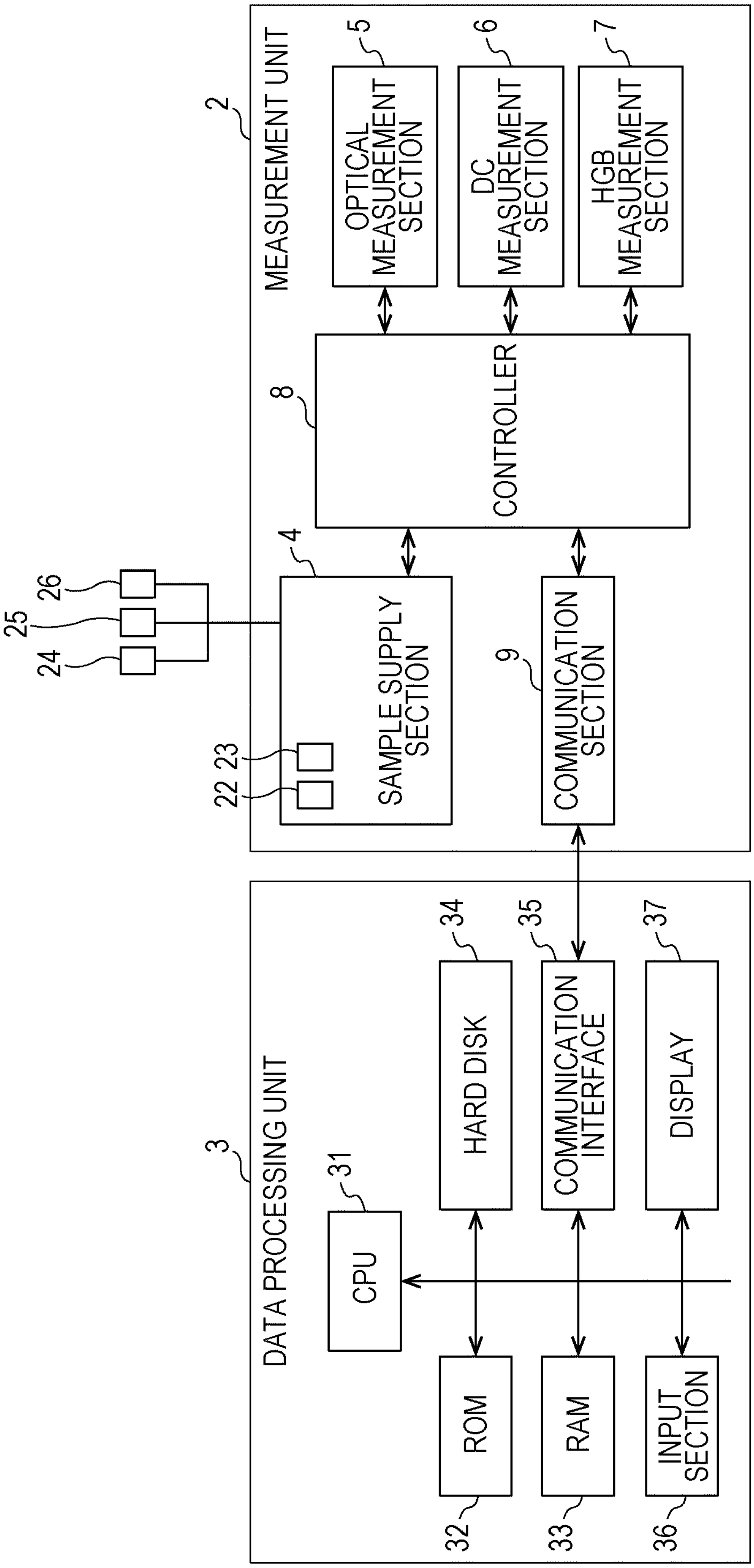
MEASUREMENT UNIT
2
OPTICAL MEASUREMENT SECTION
5
DC MEASUREMENT SECTION
6
HGB MEASUREMENT SECTION
7
CONTROLLER
8
SAMPLE SUPPLY SECTION
4
22
23
24
25
26
COMMUNICATION SECTION
9
DATA PROCESSING UNIT
3
CPU
31
ROM
32
RAM
33
HARD DISK
34
COMMUNICATION INTERFACE
35
INPUT SECTION
36
DISPLAY
37

FIG. 3

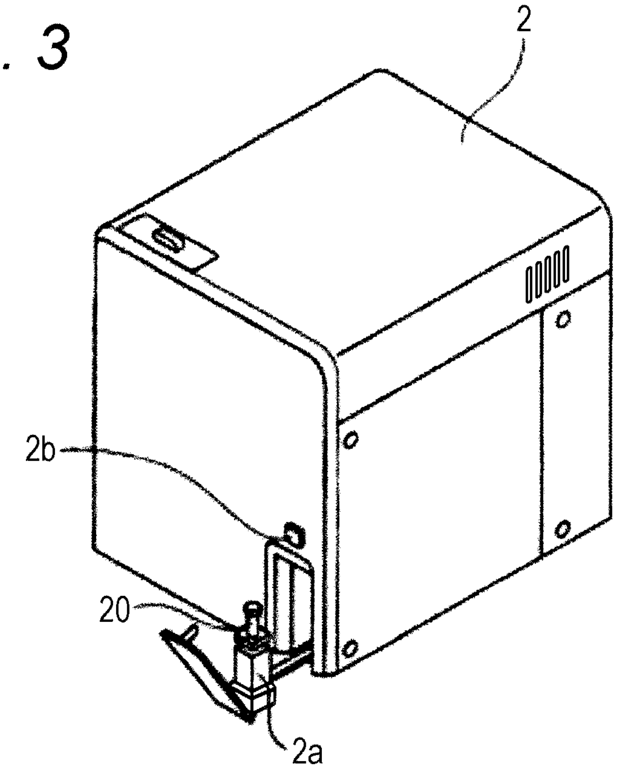


FIG. 4

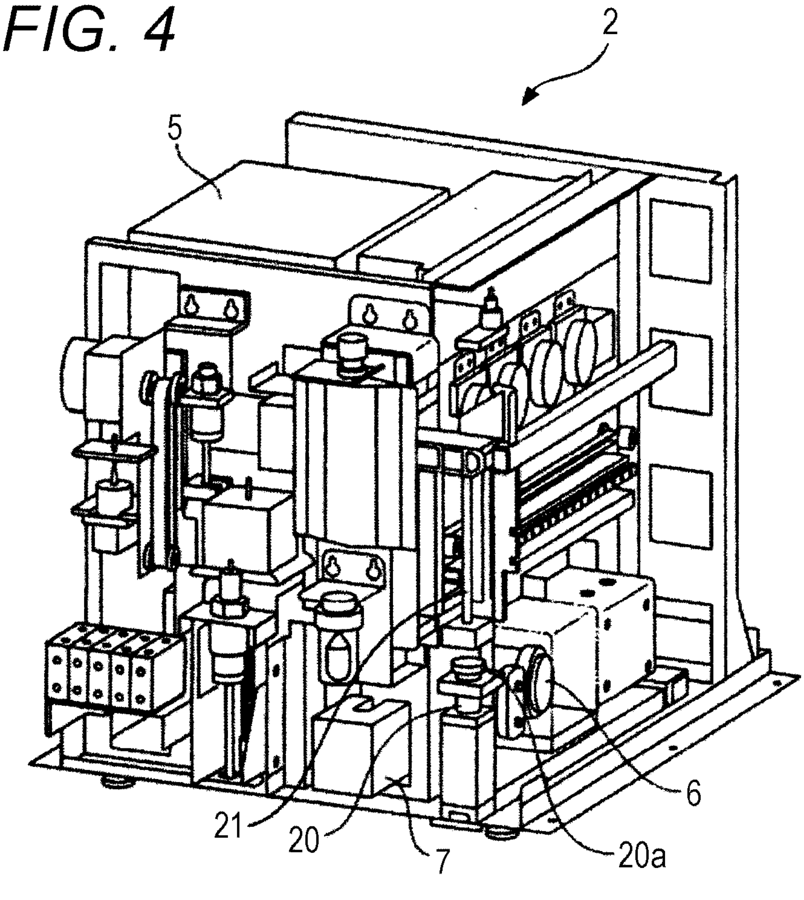

FIG. 5

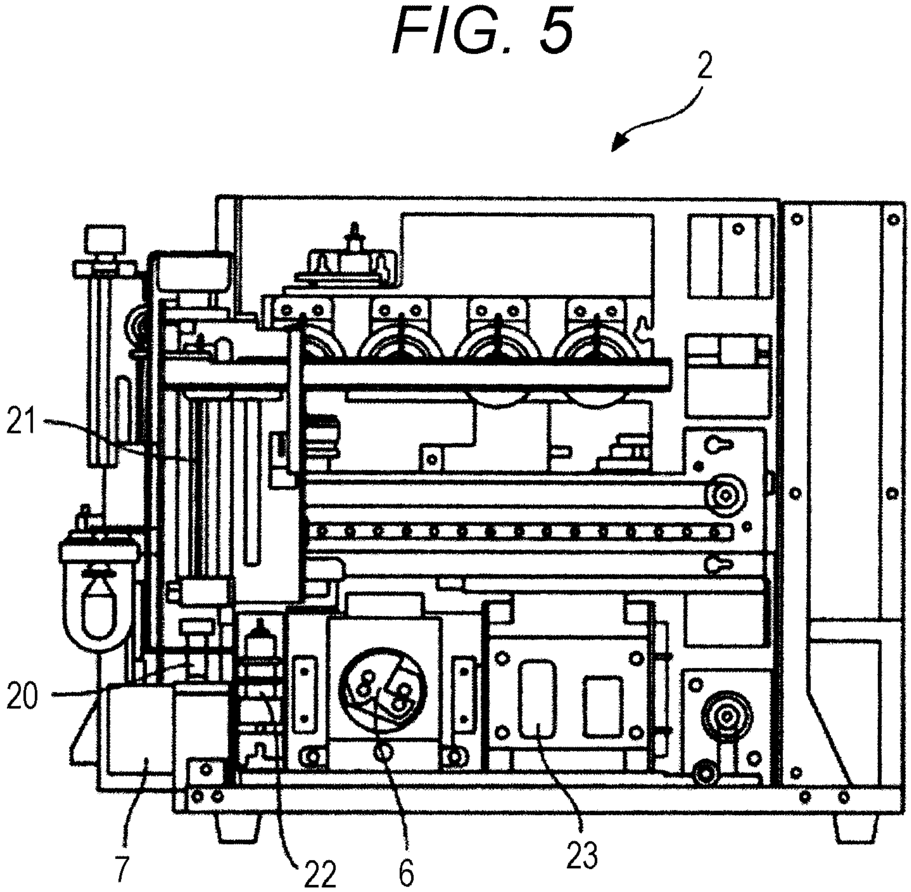


FIG. 6

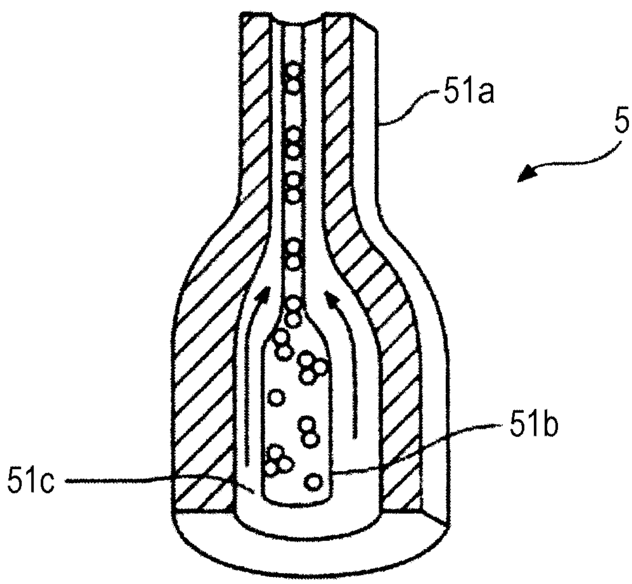

FIG. 7

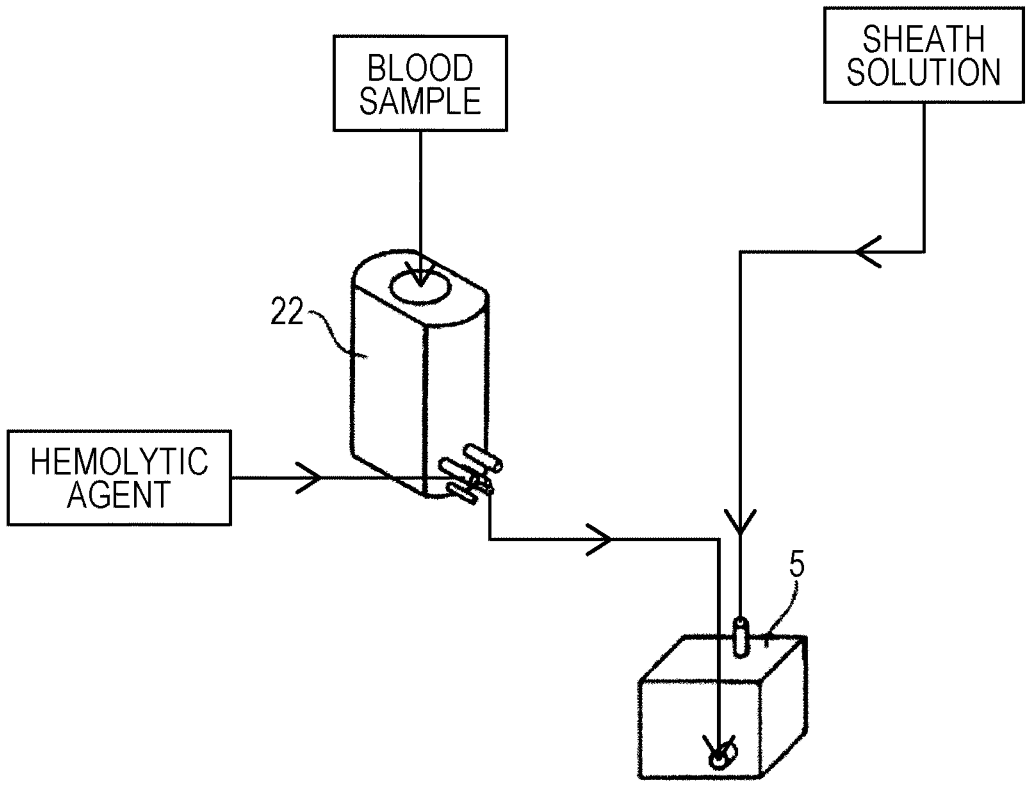

FIG. 8

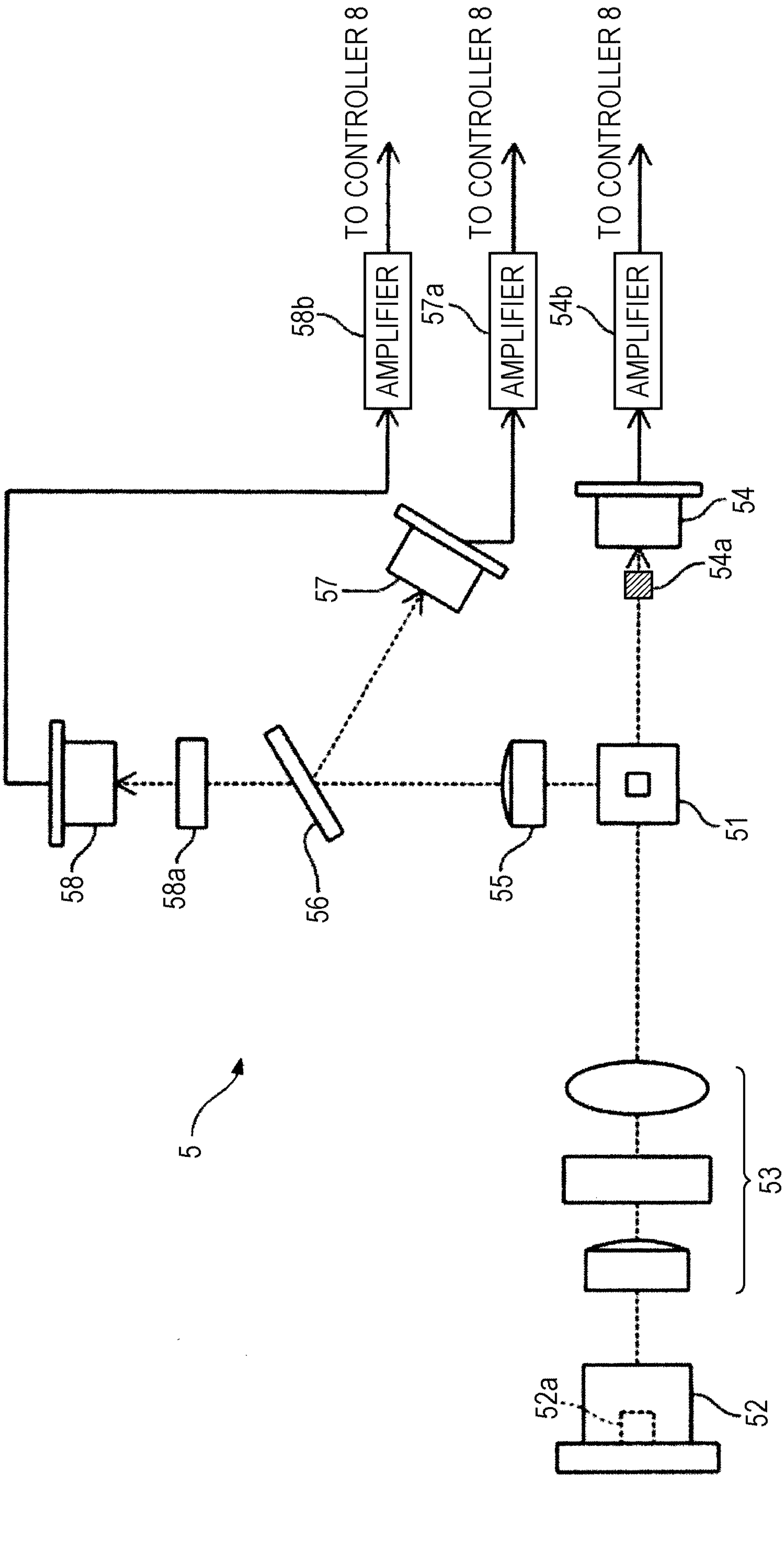
TO CONTROLLER 8
TO CONTROLLER 8
TO CONTROLLER 8
AMPLIFIER
AMPLIFIER
AMPLIFIER
58b
57a
54b
57
54
54a
58
58a
56
55
51
5
53
52a
52

FIG. 9

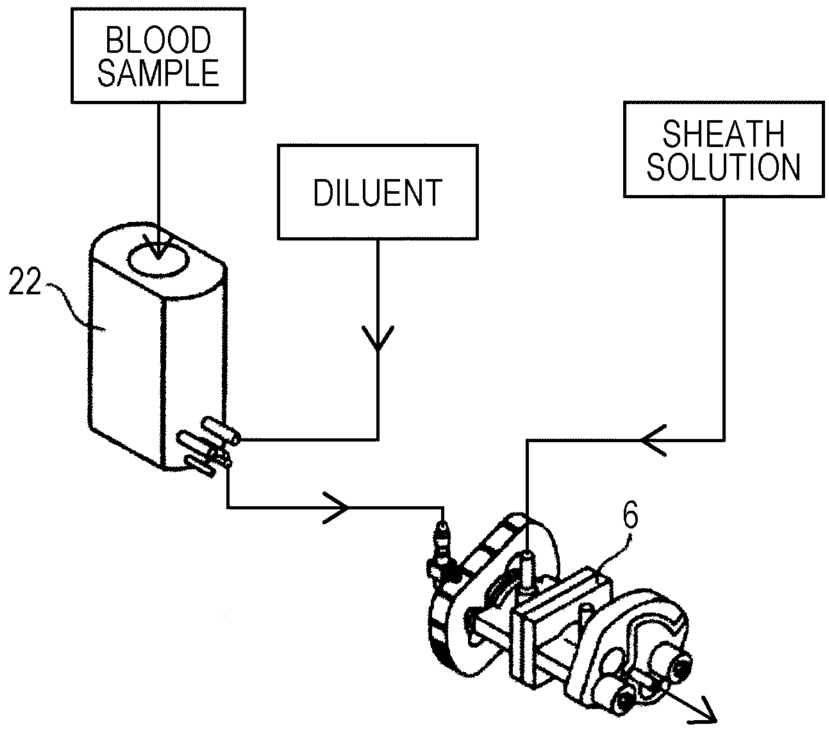
BLOOD SAMPLE
DILUENT
SHEATH SOLUTION
22
6

FIG. 10

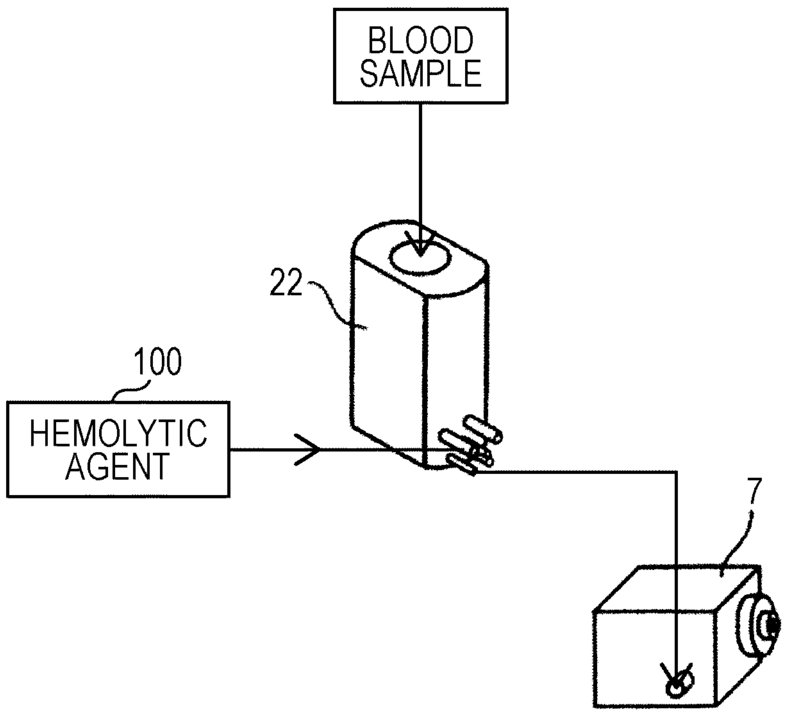
BLOOD SAMPLE
22
100
HEMOLYTIC AGENT
7

FIG. 11

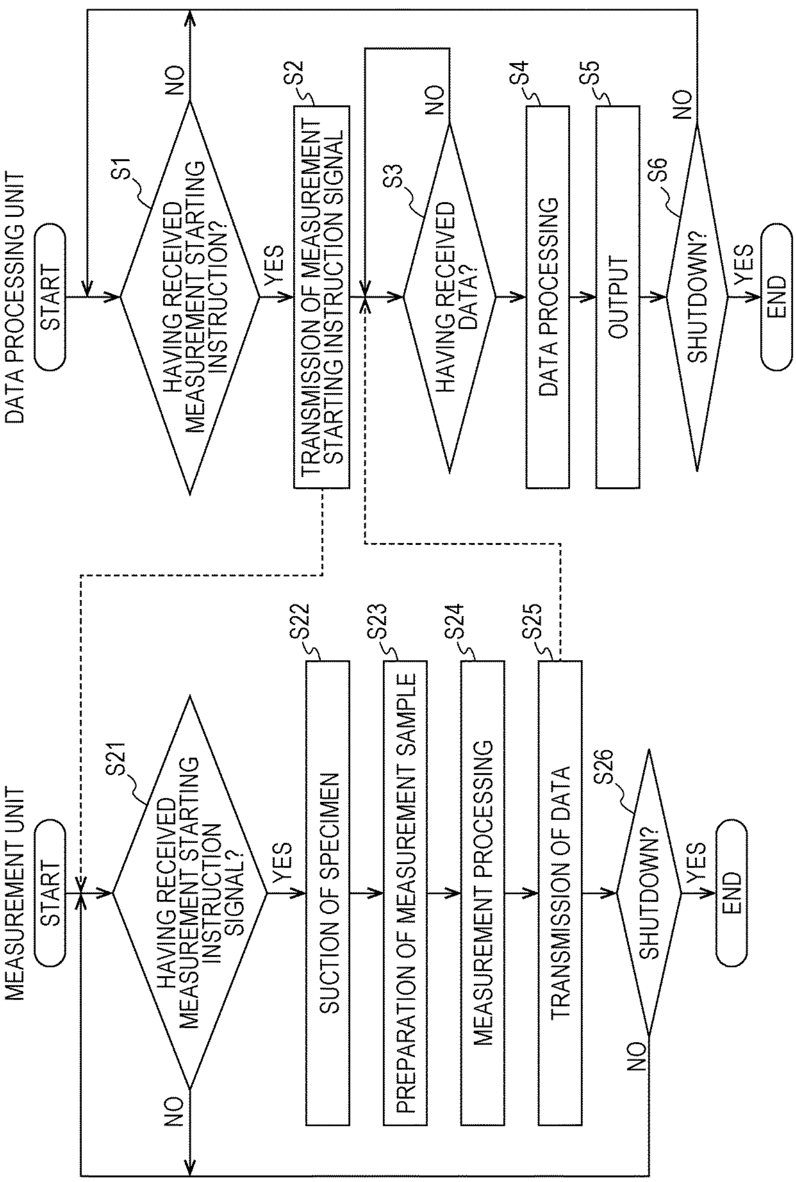
DATA PROCESSING UNIT
START
S1
HAVING RECEIVED MEASUREMENT STARTING INSTRUCTION?
NO
YES
S2
TRANSMISSION OF MEASUREMENT STARTING INSTRUCTION SIGNAL
S3
HAVING RECEIVED DATA?
NO
S4
DATA PROCESSING
S5
OUTPUT
S6
SHUTDOWN?
NO
YES
END
MEASUREMENT UNIT
START
S21
HAVING RECEIVED MEASUREMENT STARTING INSTRUCTION SIGNAL?
NO
YES
S22
SUCTION OF SPECIMEN
S23
PREPARATION OF MEASUREMENT SAMPLE
S24
MEASUREMENT PROCESSING
S25
TRANSMISSION OF DATA
S26
SHUTDOWN?
NO
YES
END

FIG. 12

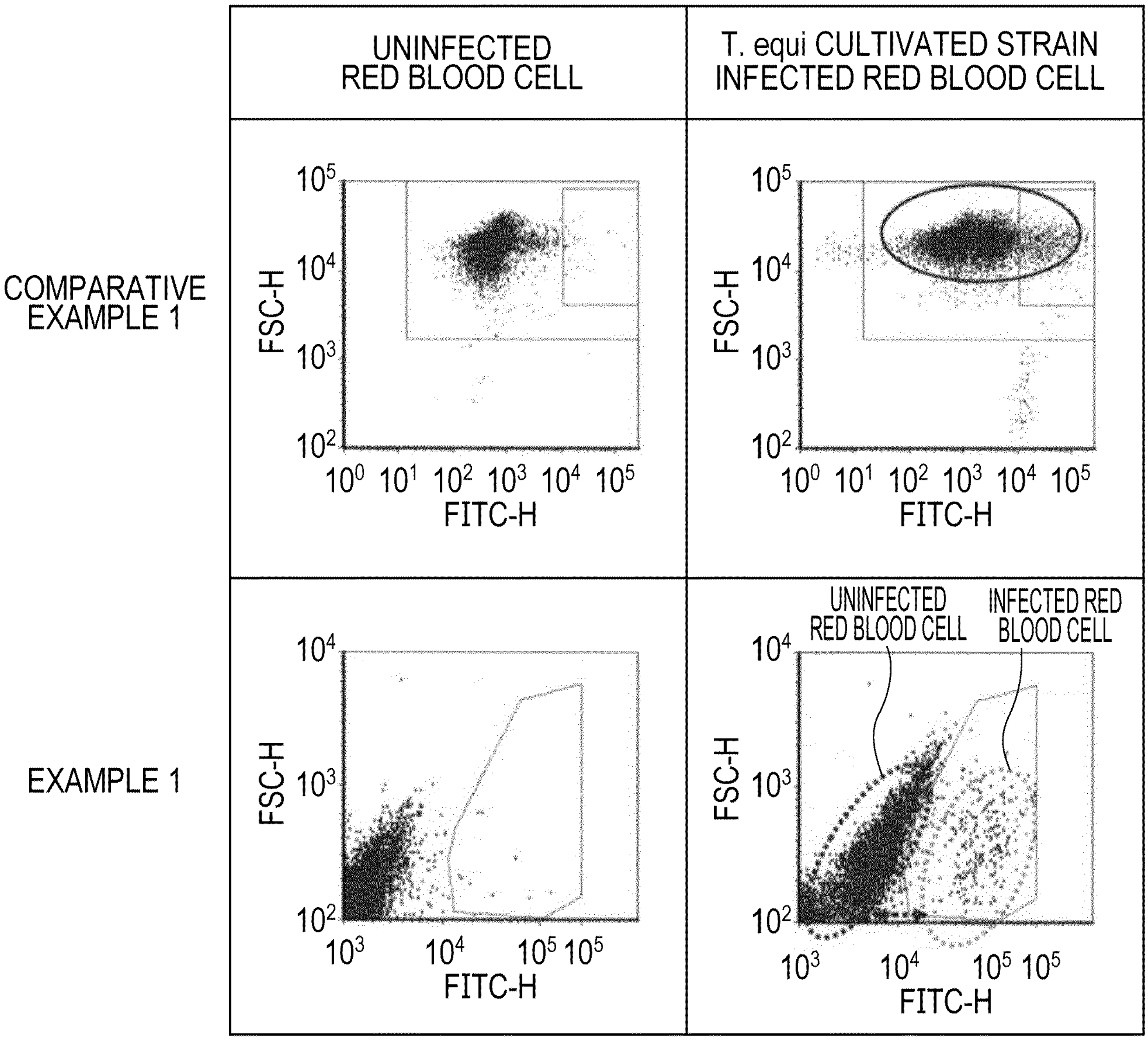
UNINFECTED RED BLOOD CELL
T. equi CULTIVATED STRAIN INFECTED RED BLOOD CELL
COMPARATIVE EXAMPLE 1
EXAMPLE 1
FSC-H
FITC-H
10^0 10^1 10^2 10^3 10^4 10^5
UNINFECTED RED BLOOD CELL
INFECTED RED BLOOD CELL

*FIG. 13*

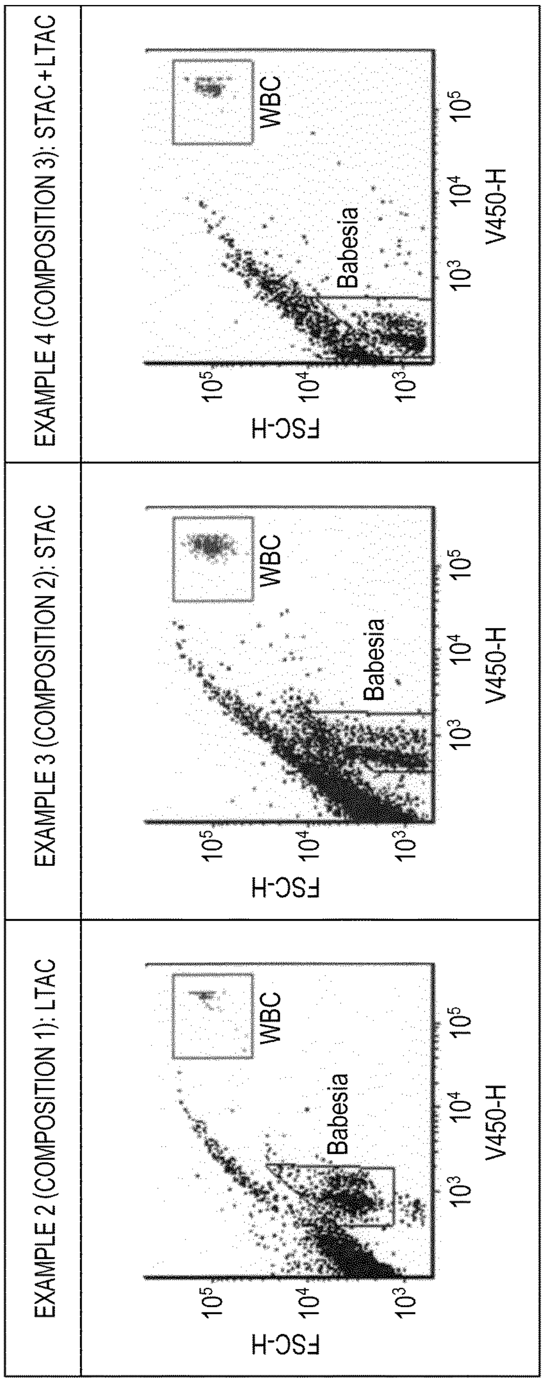
EXAMPLE 2 (COMPOSITION 1): LTAC
EXAMPLE 3 (COMPOSITION 2): STAC
EXAMPLE 4 (COMPOSITION 3): STAC+LTAC
FSC-H
V450-H
$10^3$
$10^4$
$10^5$
WBC
Babesia

FIG. 14

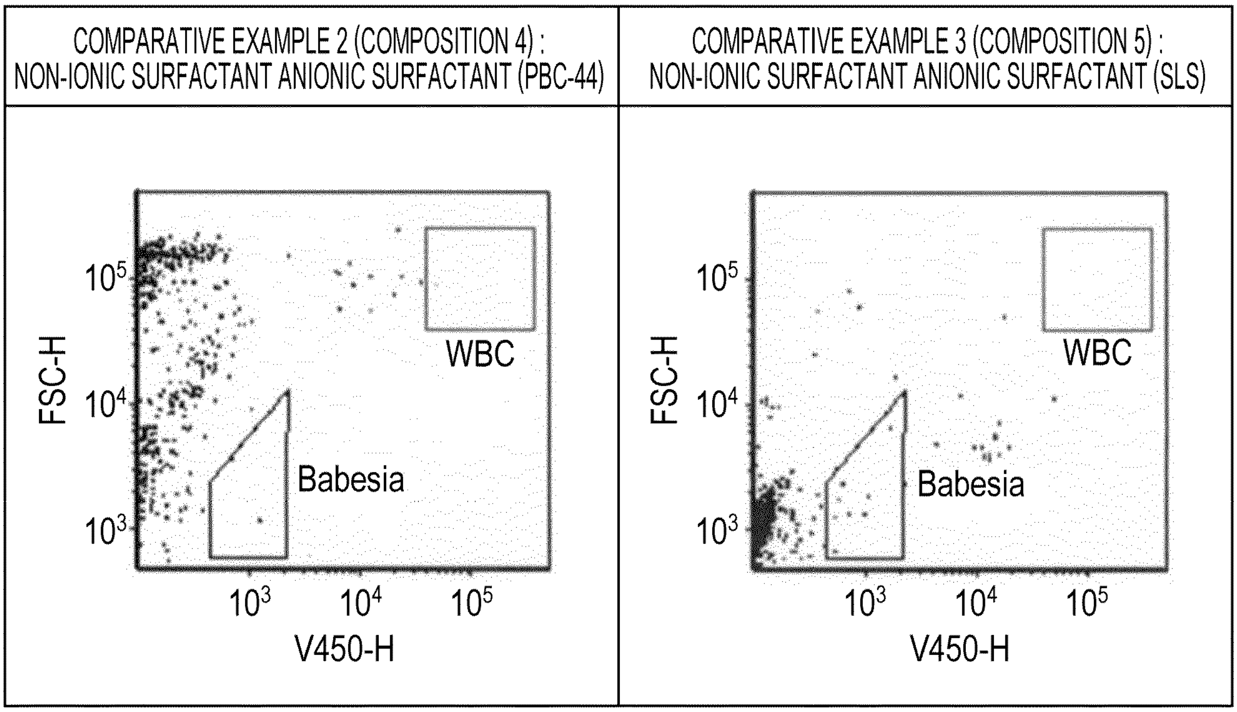
COMPARATIVE EXAMPLE 2 (COMPOSITION 4) :
NON-IONIC SURFACTANT ANIONIC SURFACTANT (PBC-44)
COMPARATIVE EXAMPLE 3 (COMPOSITION 5) :
NON-IONIC SURFACTANT ANIONIC SURFACTANT (SLS)
FSC-H
V450-H
$10^3$
$10^4$
$10^5$
WBC
Babesia

FIG. 15

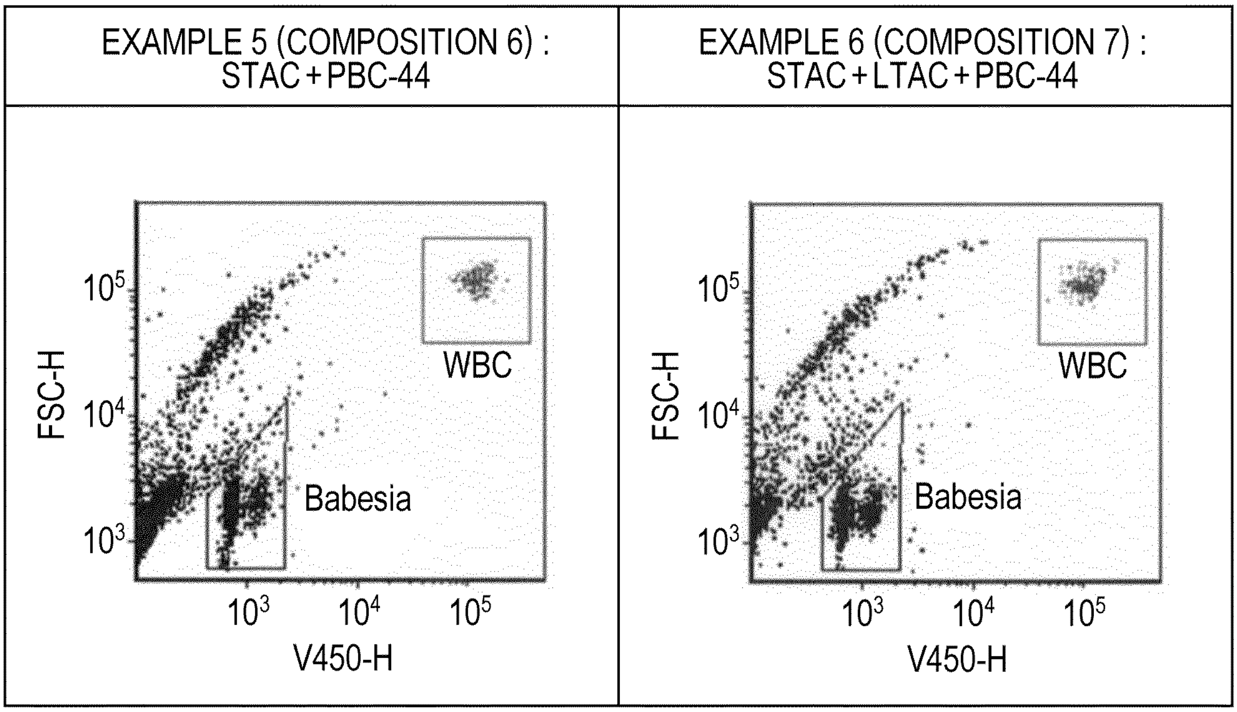
EXAMPLE 5 (COMPOSITION 6) :
STAC + PBC-44
EXAMPLE 6 (COMPOSITION 7) :
STAC + LTAC + PBC-44
FSC-H
V450-H
$10^3$
$10^4$
$10^5$
WBC
Babesia

## FIG. 16

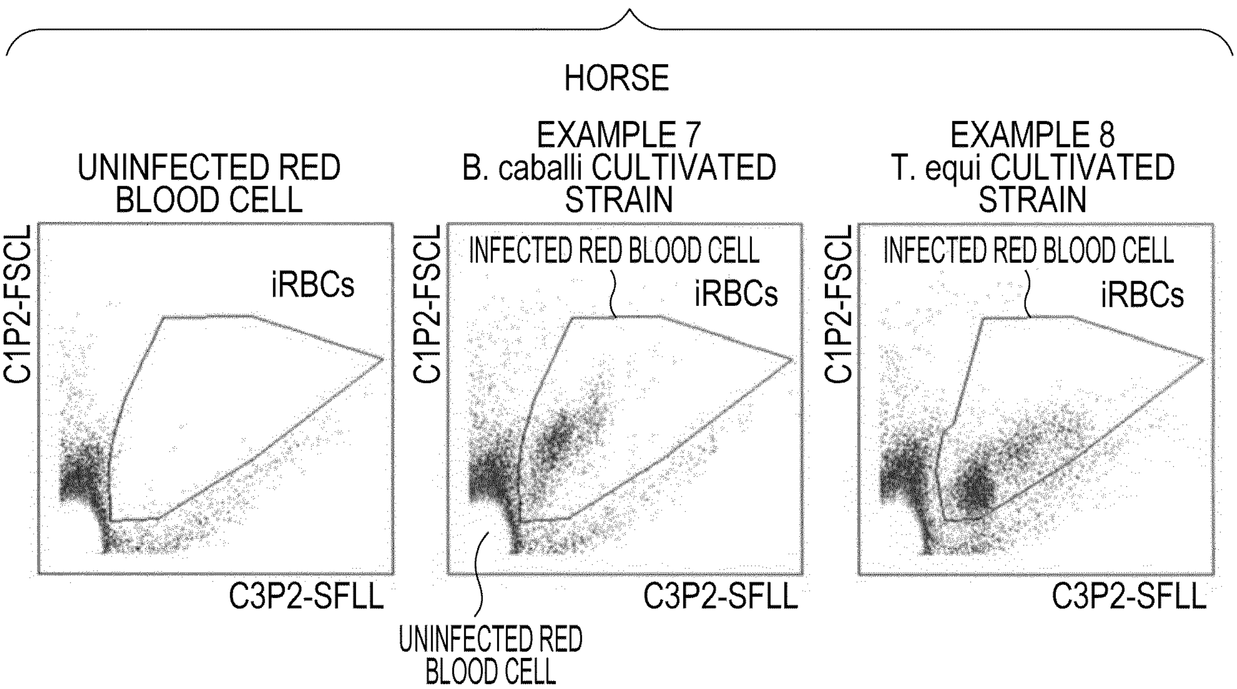
HORSE
UNINFECTED RED BLOOD CELL
EXAMPLE 7
B. caballi CULTIVATED STRAIN
EXAMPLE 8
T. equi CULTIVATED STRAIN
C1P2-FSCL
iRBCs
C3P2-SFLL
INFECTED RED BLOOD CELL
UNINFECTED RED BLOOD CELL

## FIG. 17

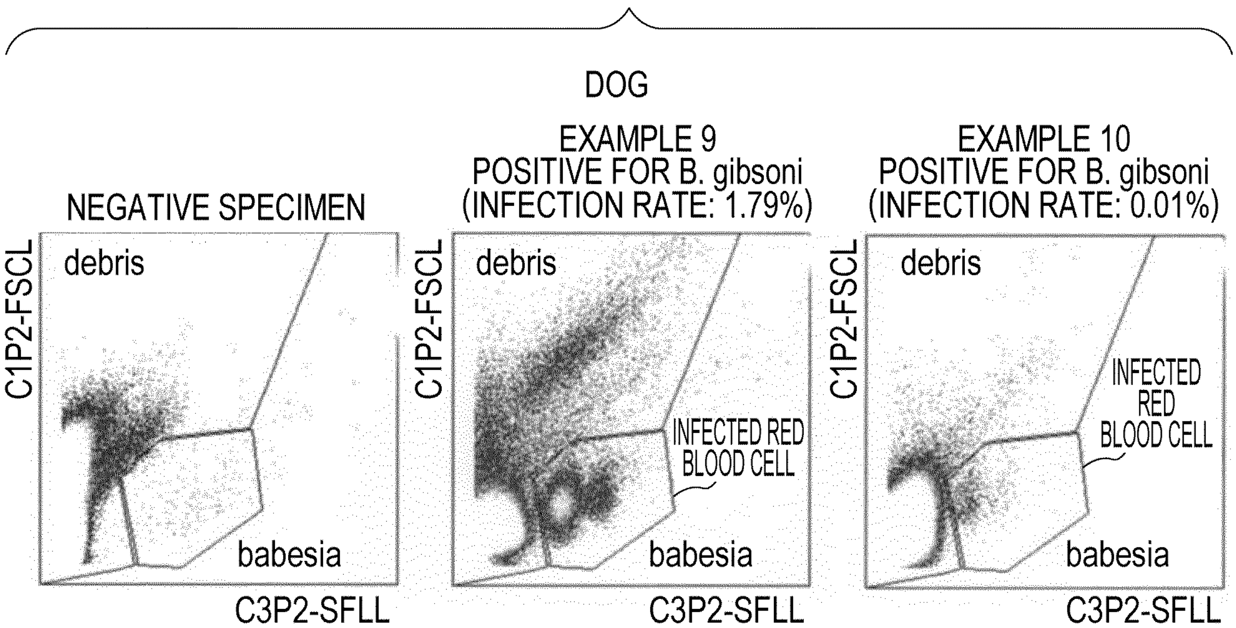
DOG
NEGATIVE SPECIMEN
EXAMPLE 9
POSITIVE FOR B. gibsoni
(INFECTION RATE: 1.79%)
EXAMPLE 10
POSITIVE FOR B. gibsoni
(INFECTION RATE: 0.01%)
C1P2-FSCL
debris
babesia
C3P2-SFLL
INFECTED RED BLOOD CELL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YAGI Y ; SHIONO H ; KURABAYASHI N ; YOSHIHARA K ; CHIKAYAMA Y.** *Cytometry.,* 01 November 2000, vol. 41 (3), 223-5


- **YAGI Y ; SHIONO H ; KURABAYASHI N ; YOSHIHARA K ; CHIKAYAMA Y.** *Cytometry.,* 01 November 2000, vol. 41 (3), 223-5


- *CHEMICAL ABSTRACTS,* 911004-45-0